(19) **Europäisches Patentamt / European Patent Office / Office européen des brevets**

(11) **EP 4 387 340 A1**

(12) **EUROPEAN PATENT APPLICATION**
published in accordance with Art. 153(4) EPC

(43) Date of publication:
19.06.2024 Bulletin 2024/25

(21) Application number: 22863176.8

(22) Date of filing: 19.08.2022

(51) International Patent Classification (IPC):
**H04W 52/02** (2009.01)

(52) Cooperative Patent Classification (CPC):
**H04W 52/02; H04W 72/12; H04W 76/28;**
Y02D 30/70

(86) International application number:
**PCT/CN2022/113491**

(87) International publication number:
**WO 2023/030037 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 03.09.2021 CN 202111029909

(71) Applicant: **Huawei Technologies Co., Ltd.**
**Shenzhen, Guangdong 518129 (CN)**

(72) Inventors:
• **HUANG, Wenwen**
  **Shenzhen, Guangdong 518129 (CN)**
• **TIE, Xiaolei**
  **Shenzhen, Guangdong 518129 (CN)**
• **ZHOU, Han**
  **Shenzhen, Guangdong 518129 (CN)**
• **ZHANG, Zhanzhan**
  **Shenzhen, Guangdong 518129 (CN)**

(74) Representative: **Maiwald GmbH**
**Engineering**
**Elisenhof**
**Elisenstrasse 3**
**80335 München (DE)**

(54) **METHOD AND APPARATUS FOR INFORMATION MONITORING**

(57) This application provides an information monitoring method and apparatus, to reduce power consumption of a terminal device. The method includes: The terminal device determines at least one first PDCCH candidate location based on a search space set in a first SSSG; the terminal device monitors a first PDCCH at the first PDCCH candidate location during running of an on-duration timer in a DRX cycle; the terminal device determines at least one second PDCCH candidate location based on a search space set in a second SSSG; and when monitoring, on the first PDCCH, first control information used to schedule newly transmitted data, the terminal device monitors a second PDCCH at the second PDCCH candidate location during running of an inactivity timer in the DRX cycle, where a period of the first PDCCH is greater than a period of the second PDCCH and/or duration of the search space set in the first SSSG is less than duration of the search space set in the second SSSG.

FIG. 9

**Description**

This application claims priority to Chinese Patent Application No. 202111029909.6, filed with the China National Intellectual Property Administration on September 3, 2021 and entitled "INFORMATION MONITORING METHOD AND APPARATUS", which is incorporated herein by reference in its entirety.

**TECHNICAL FIELD**

This application relates to the communication field, and more specifically, to an information monitoring method and apparatus.

**BACKGROUND**

Extended reality (extended reality, XR) and cloud gaming (cloud gaming, CG) are important application scenarios of a 5th generation (5th generation, 5G) system. XR is a general term for different types of reality (reality), and refers to a real and virtual combined environment and human-machine interaction generated by using a computer or a wearable device. XR types include augmented reality (augmented reality, AR), mixed reality (mixed reality, MR), virtual reality (virtual reality, VR), and the like. Downlink service transmission is used as an example. A transmission process of XR and CG service data is roughly as follows: An XR or CG server performs processing such as logical calculation, content rendering, and coding on a video frame, and then sends the video frame to a core network device. The core network device transmits the video frame to a network device, and the network device transmits the video frame to user equipment (user equipment, UE) through an air interface.

A time at which the video frame of a XR/CG service arrives at the network device is quasi-periodic and jittery, and data is not always transmitted. If the UE that receives the XR/CG service is in a state of monitoring a physical downlink control channel (physical downlink control channel, PDCCH) for a long time, power consumption of a terminal device is excessively high.

In a connected mode discontinuous reception (connected mode discontinuous reception, C-DRX) mechanism, the UE may monitor a PDCCH in an active time of each DRX cycle based on configuration information of the DRX, and may be in a sleep state and do not monitor the PDCCH in a non-active time of each DRX cycle. The active time includes a running time of an on-duration timer (onDurationTimer), and the running time of the on-duration timer appears periodically. Considering jitter of the XR/CG service in terms of time, when the C-DRX mechanism is used, long duration of the on-duration timer needs to be configured to cover jitter of the video frame of the XR/CG. If the video frame arrives late and the UE performs PDCCH blind detection when onDurationTimer is started, a waste of power consumption is caused. In addition, it is usually difficult to match a period of the XR/CG service with a DRX cycle, and an arrival time of the video frame of the XR/CG may fall within a non-active time of the C-DRX. In this case, the network device can only wait for an active time of a next DRX cycle to schedule the video frame. As a result, a transmission delay may be increased.

**SUMMARY**

This application provides an information monitoring method and apparatus, to reduce power consumption of a terminal device.

According to a first aspect, an information monitoring method is provided. The method may be performed by a terminal device or a chip or a chip system on the terminal side. The method includes: The terminal device determines at least one first physical downlink control channel PDCCH candidate location based on a search space set in a first search space set group SSSG. The terminal device monitors a first PDCCH at the first PDCCH candidate location during running of an on-duration timer in a discontinuous reception DRX cycle. The terminal device determines at least one second PDCCH candidate location based on a search space set in a second SSSG. When monitoring, on the first PDCCH, first control information used to schedule newly transmitted data, the terminal device monitors a second PDCCH at the second PDCCH candidate location during running of an inactivity timer in the DRX cycle, where a period of the first PDCCH is greater than a period of the second PDCCH and/or duration of the search space set in the first SSSG is less than duration of the search space set in the second SSSG.

Based on the foregoing technical solution, before receiving the first control information used to schedule the newly transmitted data, the terminal device monitors the first PDCCH based on the first PDCCH candidate location with a long monitoring period or a small bandwidth of a CORESET, so that power consumption of the terminal device can be reduced. When receiving the first control information used to schedule the newly transmitted data, the terminal device monitors the second PDCCH based on the second PDCCH candidate location with a short monitoring period or a small bandwidth of a CORESET, so that a data transmission delay can be reduced. In the conventional technology, when the on-duration timer starts to run, the terminal device may monitor the PDCCH by using the search space set in the second SSSG, that is, monitor the PDCCH by using the short PDCCH period, but a moment at which the data arrives at a network device is later than a moment at which the on-duration timer starts. As a result, the terminal device monitors the PDCCH based on the search space set in the second SSSG, resulting in a waste of power consumption. Compared with the conventional technology, the foregoing technical solution can prevent the terminal device from monitoring the PDCCH by always using the short PDCCH monitoring period during running of the on-duration timer in the DRX cycle, thereby reducing power consumption of the terminal device.

In an implementation, the method further includes: The terminal device determines at least one third PDCCH candidate location based on the search space set in the second SSSG. The terminal device monitors a third PDCCH at the third PDCCH candidate location during running of the on-duration timer in the DRX cycle, where a time for monitoring the first PDCCH is different from a time for monitoring the third PDCCH. The terminal device monitors the first PDCCH at the time for monitoring the first PDCCH based on the first PDCCH candidate location with the long monitoring period, so that power consumption of the terminal device can be reduced. When the terminal device monitors the third PDCCH at the time for monitoring the third PDCCH based on the third PDCCH candidate location with a short monitoring period, so that a data transmission delay can be reduced.

In an implementation, the method further includes: The terminal device receives first configuration information from a network device, where the first configuration information includes at least one of the following: a start time for monitoring the first PDCCH, a time length for monitoring the first PDCCH, a start time for monitoring the third PDCCH, or a time length for monitoring the third PDCCH.

In an implementation, the start time for monitoring the first PDCCH is the same as a start time at which the on-duration timer is started in the DRX cycle.

In an implementation, when the terminal device monitors the first PDCCH at the first PDCCH candidate location, a first scheduling offset value is greater than or equal to a first threshold, where the first scheduling offset value is a time offset value between the first PDCCH and a physical downlink shared channel PDSCH or a physical uplink shared channel PUSCH scheduled by the first PDCCH. When the terminal device monitors the second PDCCH at the second PDCCH candidate location, a second scheduling offset value is greater than or equal to a second threshold, where the second scheduling offset value is a time offset value between the second PDCCH and a PDSCH or a PUSCH scheduled by the second PDCCH, and the first threshold is greater than the second threshold. When the terminal device monitors the third PDCCH at the third PDCCH candidate location, a third scheduling offset value is greater than or equal to the second threshold, where the third scheduling offset value is a time offset value between the third PDCCH and a PDSCH or a PUSCH scheduled by the third PDCCH.

In an implementation, the method further includes: The terminal device determines, based on obtained DRX configuration information, a start time of an $i^{th}$ DRX cycle and/or a start time at which the on-duration timer is started in the $i^{th}$ DRX cycle, where i is a positive integer. The terminal device determines a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer. The terminal device determines, based on the DRX configuration information, the first parameter m, and the second parameter T, a start time of an $(i+m)^{th}$ DRX cycle and/or a start time at which the on-duration timer is started in the $(i+m)^{th}$ DRX cycle.

Based on the foregoing solution, the start time of the DRX cycle and/or the start time of the on-duration timer in the DRX cycle are/is automatically adjusted every m DRX cycles, so that an arrival time of the data that needs to be transmitted can be prevented from falling within a non-active time of the DRX, and a data transmission delay can be reduced.

In an implementation, that the terminal device determines a first parameter m and a second parameter T includes: The terminal device receives second configuration information from the network device, where the second configuration information includes the first parameter m and the second parameter T.

In an implementation, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

In an implementation, the method further includes: The terminal device obtains first indication information, where the first indication information indicates a start time at which the on-duration timer is started in a next DRX cycle and/or an offset value of the start time at which the on-duration timer is started in the next DRX cycle. The terminal device determines, based on the first indication information, the start time at which the on-duration timer is started in the next DRX cycle.

Based on the foregoing solution, the terminal device may adjust, based on the obtained first indication information indicating the start time at which the on-duration timer is started in the next DRX cycle and/or the offset value of the start time at which the on-duration timer is started in the next DRX cycle, the start time at which the on-duration timer is started in the next DRX cycle. Therefore, an arrival time of the data that needs to be transmitted can be prevented from falling within the non-active time of the DRX, and a data transmission delay can be reduced.

In an implementation, that the terminal device determines, based on the first indication information, the start time at which the on-duration timer is started in the next DRX cycle includes: The terminal device determines, based on the DRX configuration information and the offset value of the start time at which the on-duration timer is started, the start time at which the on-duration timer is started in the next DRX cycle.

According to a second aspect, an information monitoring method is provided. The method may be performed by a network device or a chip or a chip system on the network side. The method includes: The network device determines at least one first physical downlink control channel PDCCH candidate location based on a search space set in a first search space set group SSSG. The network device sends at least one piece of first control information to a terminal device at the first PDCCH candidate location during running of an on-duration timer in a discontinuous reception DRX cycle. The network device determines at least one second PDCCH candidate location based on a search space set in a second SSSG. The first control information is used to schedule newly transmitted data, and during running of an inactivity timer in the DRX cycle, the network device sends at least one piece of second control information to the terminal device at the second PDCCH candidate location, where a period of the first PDCCH is greater than a period of the second PDCCH and/or duration of the search space set in the first SSSG is less than duration of the search space set in the second SSSG.

In an implementation, the network device determines at least one third PDCCH candidate location based on the search space set in the second SSSG. The network device sends at least one piece of third control information to the terminal device at the third PDCCH candidate location during running of the on-duration timer in the DRX cycle, where a time at which the first control information is sent is different from a time at which the third control information is sent.

In an implementation, the method further includes: The network device sends first configuration information to the terminal device, where the first configuration information includes at least one of the following: a start time for monitoring the first PDCCH, a time length for monitoring the first PDCCH, a start time for monitoring the third PDCCH, or a time length for monitoring the third PDCCH.

In an implementation, the method further includes: The network device determines, based on DRX configuration information, a start time of an $i^{th}$ DRX cycle and/or a start time at which the on-duration timer is started in the $i^{th}$ DRX cycle, where i is a positive integer. The network device determines a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer. The network device determines, based on the DRX configuration information, the first parameter m, and the second parameter T, a start time of an $(i+m)^{th}$ DRX cycle and/or a start time at which the on-duration timer is started in the $(i+m)^{th}$ DRX cycle.

In an implementation, the method further includes: The network device determines the first parameter m and the second parameter T. The network device sends second configuration information to the terminal device, where the second configuration information includes the first parameter m and the second parameter T.

In an implementation, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

In an implementation, the method further includes: The network device determines first indication information, where the first indication information indicates a start time at which the on-duration timer is started in a next DRX cycle and/or an offset value of the start time at which the on-duration timer is started in the next DRX cycle. The network device sends the first indication information to the terminal device in an active time of the DRX cycle.

In an implementation, the start time of the DRX cycle is the same as the start time at which the on-duration timer is started in the DRX cycle.

According to a third aspect, an information monitoring method is provided. The method may be performed by a terminal device or a chip or a chip system on the terminal side. The method includes: The terminal device determines, based on obtained DRX configuration information, a start time of an $i^{th}$ discontinuous reception DRX cycle and/or a start time at which an on-duration timer is started in the $i^{th}$ DRX cycle, where i is a positive integer. The terminal device determines a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer. The terminal device determines, based on the DRX configuration information, the first parameter m, and the second parameter T, a start time of an $(i+m)^{th}$

DRX cycle and/or a start time at which the on-duration timer is started in the $(i+m)^{th}$ DRX cycle.

Based on the foregoing technical solution, the terminal device automatically adjusts the start time of the DRX cycle and/or the start time of the on-duration timer in the DRX cycle every m DRX cycles, so that an arrival time of the data that needs to be transmitted can be prevented from falling within a non-active time of the DRX, and a data transmission delay can be reduced.

In an implementation, that the terminal device determines a first parameter m and a second parameter T includes: The terminal device receives second configuration information from a network device, where the second configuration information includes the first parameter m and the second parameter T.

In an implementation, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

In an implementation, the start time of the DRX cycle is the same as the start time at which the on-duration timer is started in the DRX cycle.

According to a fourth aspect, an information monitoring method is provided. The method may be performed by a network device or a chip or a chip system on the network side. The method includes: The network device determines, based on DRX configuration information, a start time of an $i^{th}$ DRX cycle and/or a start time at which an on-duration timer is started in the $i^{th}$ DRX cycle, where i is a positive integer. The network device determines a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer. The network device determines, based on the DRX configuration information, the first parameter m, and the second parameter T, a start time of an $(i+m)^{th}$ DRX cycle and/or a start time at which the on-duration timer is started in the $(i+m)^{th}$ DRX cycle.

In an implementation, the method further includes: The network device determines the first parameter m and the second parameter T. The network device sends second configuration information to the terminal device, where the second configuration information includes the first parameter m and the second parameter T.

In an implementation, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

In an implementation, the start time of the DRX cycle is the same as the start time at which the on-duration timer is started in the DRX cycle.

According to a fifth aspect, an information monitoring method is provided. The method may be performed by a terminal device or a chip or a chip system on the terminal side. The method includes: The terminal device monitors at least one physical downlink control channel PDCCH and/or receives data on at least one physical downlink shared channel PDSCH in an active time of a discontinuous reception DRX cycle, where control information carried on the at least one PDCCH and/or the data include/includes first indication information, and the first indication information indicates a start time at which the on-duration timer is started in a next DRX cycle and/or an offset value of the start time at which the on-duration timer is started in the next DRX cycle. The terminal device determines, based on the first indication information, the start time at which the on-duration timer is started in the next DRX cycle.

Based on the foregoing technical solution, the terminal device may adjust, based on the obtained first indication information indicating the start time at which the on-duration timer is started in the next DRX cycle and/or the offset value of the start time at which the on-duration timer is started in the next DRX cycle, the start time at which the on-duration timer is started in the next DRX cycle. Therefore, an arrival time of the data that needs to be transmitted can be prevented from falling within the non-active time of the DRX, and a data transmission delay can be reduced.

In an implementation, that the terminal device determines, based on the first indication information, the start time at which the on-duration timer is started in the next DRX cycle includes: The terminal device determines, based on the DRX configuration information and the offset value of the start time at which the on-duration timer is started, the start time at which the on-duration timer is started in the next DRX cycle.

In an implementation, the start time of the DRX cycle is the same as the start time at which the on-duration timer is started in the DRX cycle.

According to a sixth aspect, an information monitoring method is provided. The method may be performed by a network device or a chip or a chip system on the network side. The method includes: The network device determines first indication information, where the first indication information indicates a start time at which an on-duration timer is started in a next DRX cycle and/or an offset value of the start time at which the on-duration timer is started in the next DRX cycle. The network device sends at least one piece of control information and/or at least one piece of data to a terminal device in an active time of the DRX cycle, where the control information and/or the data include/includes the first indication information.

In an implementation, the start time of the DRX cycle is the same as the start time at which the on-duration timer is started in the DRX cycle.

According to a seventh aspect, a communication apparatus is provided. For beneficial effect, refer to the descriptions in the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the foregoing function. In a possible design, the communication apparatus includes a determining module and a transceiver module. The determining module is configured to determine at least one first physical downlink control channel PDCCH candidate location based on a search space set in a first search space set group SSSG. The transceiver module is configured to monitor a first PDCCH at the first PDCCH candidate location during running of an on-duration timer in a discontinuous reception DRX cycle. The determining module is further configured to determine at least one second PDCCH candidate location based on a search space set in a second SSSG. The transceiver module is further configured to: when monitoring, on the first PDCCH, first control information used to schedule newly transmitted data, monitor a second PDCCH at the second PDCCH candidate location during running of an inactivity timer in the DRX cycle, where a period of the first PDCCH is greater than a period of the second PDCCH and/or duration of the search space set in the first SSSG is less than duration of the search space set in the second SSSG. These modules may perform corresponding functions in the method example in the first aspect. For details, refer to the detailed descriptions in the method example. Details are not described herein again.

In an implementation, the determining module is further configured to determine at least one third PDCCH candidate location based on the search space set in the second SSSG. The transceiver module is further configured to monitor a third PDCCH at the third PDCCH candidate location during running of the on-duration timer in the DRX cycle, where a time for monitoring the first PDCCH is different from a time for monitoring the third PDCCH.

In an implementation, the transceiver module is further configured to receive first configuration information from a network device, where the first configuration information includes at least one of the following: a start time for monitoring the first PDCCH, a time length for monitoring the first PDCCH, a start time for monitoring the third PDCCH, or a time length for monitoring the third PDCCH.

In an implementation, the start time for monitoring the first PDCCH is the same as a start time at which the on-duration timer is started in the DRX cycle.

In an implementation, when the transceiver module monitors the first PDCCH at the first PDCCH candidate location, a first scheduling offset value is greater than or equal to a first threshold, where the first scheduling offset value is a time offset value between the first PDCCH and a physical downlink shared channel PDSCH or a physical uplink shared channel PUSCH scheduled by the first PDCCH. When the transceiver module monitors the second PDCCH at the second PDCCH candidate location, a second scheduling offset value is greater than or equal to a second threshold, where the second scheduling offset value is a time offset value between the second PDCCH and a PDSCH or a PUSCH scheduled by the second PDCCH, and the first threshold is greater than the second threshold. When the transceiver module monitors the third PDCCH at the third PDCCH candidate location, a third scheduling offset value is greater than or equal to the second threshold, where the third scheduling offset value is a time offset value between the third PDCCH and a PDSCH or a PUSCH scheduled by the third PDCCH.

In an implementation, the determining module is further configured to: determine, based on obtained DRX configuration information, a start time of an $i^{th}$ DRX cycle and/or a start time at which the on-duration timer is started in the $i^{th}$ DRX cycle, where i is a positive integer; determine a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and determine, based on the DRX configuration information, the first parameter m, and the second parameter T, a start time of an $(i+m)^{th}$ DRX cycle and/or a start time at which the on-duration timer is started in the $(i+m)^{th}$ DRX cycle.

In an implementation, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

In an implementation, the transceiver module is further configured to obtain first indication information, where the first indication information indicates a start time at which the on-duration timer is started in a next DRX cycle and/or an offset value of the start time at which the on-duration timer is started in the next DRX cycle. The determining module is further configured to determine, based on the first indication information, the start time at which the on-duration timer is started in the next DRX cycle.

In an implementation, the determining module is specifically configured to determine, based on the DRX configuration information and the offset value of the start time at which the on-duration timer is started, the start time at which the on-duration timer is started in the next DRX cycle.

According to an eighth aspect, a communication apparatus is provided. For beneficial effect, refer to the descriptions in the second aspect. Details are not described herein again. The communication apparatus has a function of implementing the behavior in the method example in the second aspect. The function may be implemented by hardware, or may be implemented by hardware executing corresponding software. The hardware or the software includes one or more modules corresponding to the foregoing function. In a possible design, the communication apparatus includes a determining module and a transceiver module. The determining module is configured to determine at least one first physical downlink control channel PDCCH candidate location based on a search space set in a first search space set group SSSG. The transceiver module is configured to send at least one piece of first control information to a terminal device at the first PDCCH candidate location during running of an on-duration timer in a discontinuous reception DRX cycle. The determining module is further configured to determine at least one second PDCCH candidate location based on a search space set in a second SSSG. The transceiver module is further configured to: the first control information is used to schedule newly transmitted data, and during running of an inactivity timer in the DRX cycle, send at least one piece of second control information to the terminal device at the second PDCCH candidate location, where a period of the first PDCCH is greater than a period of the second PDCCH and/or duration of the search space set in the first SSSG is less than duration of the search space set in the second SSSG. These modules may perform corresponding functions in the method example in the second aspect. For details, refer to the detailed descriptions in the method example. Details are not described herein again.

In an implementation, the determining module is further configured to determine at least one third PDCCH candidate location based on the search space set in the second SSSG. The transceiver module is further configured to send at least one piece of third control information to the terminal device at the third PDCCH candidate location during running of the on-duration timer in the DRX cycle, where a time at which the first control information is sent is different from a time at which the third control information is sent.

In an implementation, the transceiver module is further configured to send first configuration information to the terminal device, where the first configuration information includes at least one of the following: a start time for monitoring the first PDCCH, a time length for monitoring the first PDCCH, a start time for monitoring the third PDCCH, or a time length for monitoring the third PDCCH.

In an implementation, the determining module is further configured to: determine, based on DRX configuration information, a start time of an $i^{th}$ DRX cycle and/or a start time at which the on-duration timer is started in the $i^{th}$ DRX cycle, where i is a positive integer; determine a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and determine, based on the DRX configuration information, the first parameter m, and the second parameter T, a start time of an $(i+m)^{th}$ DRX cycle and/or a start time at which the on-duration timer is started in the $(i+m)^{th}$ DRX cycle.

In an implementation, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

In an implementation, the determining module is further configured to determine first indication information, where the first indication information indicates a start time at which the on-duration timer is started in a next DRX cycle and/or an offset value of the start time at which the on-duration timer is started in the next DRX cycle. The transceiver module is further configured to send the first indication information to the terminal device in an active time of the DRX cycle.

According to a ninth aspect, a communication apparatus is provided. For beneficial effect, refer to the descriptions in the third aspect. Details are not described herein again. The communication apparatus has a function of implementing the behavior in the method example in the third aspect. The function may be implemented by hardware, or may be implemented by hardware executing corresponding software. The hardware or the software includes one or more modules corresponding to the foregoing function. In a possible design, the communication apparatus includes a determining module. The determining module is configured to: determine, based on obtained DRX configuration information, a start time of an $i^{th}$ discontinuous reception DRX cycle and/or a start time at which an on-duration timer is started in the $i^{th}$ DRX cycle, where i is a positive integer; determine a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and determine, based on the DRX configuration information, the first parameter m, and the second parameter T, a start time of an $(i+m)^{th}$ DRX cycle and/or a start time at which the on-duration timer is started in the $(i+m)^{th}$ DRX cycle. These modules may perform corresponding functions in the method example in the third aspect. For details, refer to the detailed descriptions in the method example. Details are not described herein again.

In an implementation, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

According to a tenth aspect, a communication apparatus is provided. For beneficial effect, refer to descriptions in the fourth aspect. Details are not described herein again. The communication apparatus has a function of implementing the behavior in the method example in the fourth aspect. The function may be implemented by hardware, or may be implemented by hardware executing corresponding software. The hardware or the software includes one or more modules corresponding to the foregoing function. In a possible design, the communication apparatus includes a determining module. The determining module is configured to: determine, based on DRX configuration information, a start time of an $i^{th}$ DRX cycle and/or a start time at which an on-duration timer is started in the $i^{th}$ DRX cycle, where i is a positive integer; determine a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and determine, based on the DRX configuration information, the first parameter m, and the second parameter T, a start time of an $(i+m)^{th}$ DRX cycle and/or a start time at which the on-duration timer is started in the $(i+m)^{th}$ DRX cycle. These modules may perform corresponding functions in the method example in the fourth aspect. For details, refer to the detailed descriptions in the method example. Details are not described herein again.

In an implementation, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

According to an eleventh aspect, a communication apparatus is provided. For beneficial effect, refer to the description in the fifth aspect. Details are not described herein again. The communication apparatus has a function of implementing the behavior in the method example in the fifth aspect. The function may be implemented by hardware, or may be implemented by hardware executing corresponding software. The hardware or the software includes one or more modules corresponding to the foregoing function. In a possible design, the communication apparatus includes a transceiver module and a determining module. The transceiver module is configured to monitor at least one physical downlink control channel PDCCH and/or receives data on at least one physical downlink shared channel PDSCH in an active time of a discontinuous reception DRX cycle, where control information carried on the at least one PDCCH and/or the data include/includes first indication information, and the first indication information indicates a start time at which the on-duration timer is started in a next DRX cycle and/or an offset value of the start time at which the on-duration timer is started in the next DRX cycle. The determining module is configured to determine, based on the first indication information, the start time at which the on-duration timer is started in the next DRX cycle. These modules may perform corresponding functions in the method example in the fifth aspect. For details, refer to the detailed descriptions in the method example. Details are not described herein again.

In an implementation, the determining module is specifically configured to determine, based on the DRX configuration information and the offset value of the start time at which the on-duration timer is started, the start time at which the on-duration timer is started in the next DRX cycle.

According to a twelfth aspect, a communication apparatus is provided. For beneficial effect, refer to descriptions in the sixth aspect. Details are not described herein again. The communication apparatus has a function of implementing the behavior in the method example in the sixth aspect. The function may be implemented by hardware, or may be implemented by hardware executing corresponding software. The hardware or the software includes one or more modules corresponding to the foregoing function. In a possible design, the communication apparatus includes a determining module and a transceiver module. The determining module is configured to determine first indication information, where the first indication information indicates a start time at which an on-duration timer is started in a next discontinuous reception DRX cycle and/or an offset value of the start time at which the on-duration timer is started in the next DRX cycle. The transceiver module is configured to send at least one piece of control information and/or at least one piece of data to a terminal device in an active time of the DRX cycle, where the control information and/or the data include/includes the first indication information. These modules may perform corresponding functions in the method example in the sixth aspect. For details, refer to the detailed descriptions in the method example. Details are not described herein again.

According to a thirteenth aspect, a communication apparatus is provided. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a fourteenth aspect, a communication apparatus is provided. The communication apparatus may be the network device in the foregoing method embodiments, or may be a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a fifteenth aspect, a computer program product including instructions is provided. The computer program product includes computer program code, and when the computer program code runs, the method performed by the terminal device in the foregoing aspects is performed.

According to a sixteenth aspect, a computer program product is provided. The computer program product includes computer program code, and when the computer program code is run, the method performed by a network device in the foregoing aspects is performed.

According to a seventeenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to an eighteenth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

According to a nineteenth aspect, a computer-readable storage medium is provided. The computer-readable storage medium stores a computer program. When the computer program is run, the method performed by the terminal device in the foregoing aspects is implemented.

According to a twentieth aspect, this application provides a computer-readable storage medium. The computer-readable storage medium stores a computer program. When the computer program is run, the method performed by the network device in the foregoing aspects is implemented.

## BRIEF DESCRIPTION OF DRAWINGS

FIG. 1 is a schematic diagram in which a video frame arrives at a network device early or arrives at a network device late;
FIG. 2 is a schematic diagram of a group of PDCCH candidates;
FIG. 3 is a schematic diagram of a C-DRX cycle;
FIG. 4 is a schematic diagram of a relationship between starting onDurationTimer and drx-SlotOffset and drx-StartOffset;
FIG. 5 is a schematic diagram of two different SSSGs;
FIG. 6 is a schematic diagram in which a video frame arrives late;
FIG. 7 is a schematic diagram in which a network device sends a video frame based on a DRX cycle;
FIG. 8 is a schematic diagram of dividing a DRX cycle into four non-overlapping patterns;
FIG. 9 is a schematic interaction flowchart of an information monitoring method according to an embodiment of this application;
FIG. 10 is a schematic diagram of separately monitoring different PDCCHs in a first time period and a third time period during running of an on-duration timer;
FIG. 11 is another schematic diagram of monitoring different PDCCHs in a first time period and a third time period respectively based on different SSSGs during running of an on-duration timer;
FIG. 12 is a schematic diagram of adjusting a start time at which an on-duration timer is started in an (i+m)th DRX cycle;
FIG. 13 is a schematic diagram of adjusting a start time at which an on-duration timer is started in a next DRX cycle;
FIG. 14 is a schematic interaction flowchart of another information monitoring method according to an embodiment of this application;
FIG. 15 is a schematic interaction flowchart of another information monitoring method according to an embodiment of this application;
FIG. 16 to FIG. 21 are schematic block diagrams of a communication apparatus according to an embodiment of this application;
FIG. 22 is a schematic block diagram of a communication device according to an embodiment of this application;
FIG. 23 is a schematic diagram of a simplified structure of a communication apparatus according to an embodiment of this application; and

FIG. 24 is a schematic diagram of a simplified structure of a terminal device according to an embodiment of this application.

## DESCRIPTION OF EMBODIMENTS

The following describes technical solutions of this application with reference to accompanying drawings.

Embodiments of this application may be applied to various communication systems, for example, a wireless local area network (wireless local area network, WLAN) system, a narrowband internet of things (narrowband internet of things, NB-IoT) system, a global system for mobile communication (global system for mobile communication, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA 2000) system, a time division-synchronous code division multiple access (time division-synchronous code division multiple access, TD-SCDMA) system, a long term evolution (long term evolution, LTE) system, a satellite communication system, a 5th generation (5th generation, 5G) system, and a new communication system emerging in the future.

The communication system applicable to this application includes one or more transmit ends and one or more receive ends. Signal transmission between a transmit end and a receive end may be performed by using a radio wave, or may be performed by using a transmission medium such as visible light, laser, infrared, or an optical fiber.

For example, one of the transmit end and the receive end may be a terminal device, and the other may be a network device. For example, both the transmit end and the receive end may be terminal devices.

The terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

For example, the network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission and reception point (transmission and reception point, TRP). Alternatively, the network device may be a gNB or a transmission point (for example, a TRP or a TP) in a new radio (new radio, NR), one or a group (including a plurality of) of antenna panels of a base station in an NR, or may be a network node that forms a gNB or a transmission point, for example, a baseband unit (building baseband unit, BBU) or a distributed unit (distributed unit, DU). Alternatively, the network device may be a vehicle-mounted device, a wearable device, a network device in a 5G network, a network device in a future evolved PLMN network, or the like. This is not limited.

The network device has various product forms. For example, in a product implementation process, the BBU and a radio frequency unit (Radio Frequency Unit, RFU) may be integrated in a same device, and the device is connected to an antenna array by using a cable (for example, but not limited to a feeder). The BBU and the RFU may also be disposed separately, and are connected by using an optical fiber, and communicate with each other by using, for example, but not limited to, a common public radio frequency interface (common public radio interface, CPRI) protocol. In this case, the RFU is generally referred to as an RRU (remote radio unit), which is connected to an antenna array by using a cable. In addition, the RRU may also be integrated with an antenna array. For example, this structure is used in an active antenna unit (active antenna unit, AAU) product in the current market.

In addition, the BBU may be further divided into a plurality of parts. For example, the BBU can be further divided into a central unit (central unit, CU) and a distributed unit (distributed unit, DU) based on real-time performance of a processed service. The CU is responsible for processing a non-real-time protocol and service, and the DU is responsible for processing a physical layer protocol and a real-time service. Further, some physical layer functions may be separated from the BBU or the DU and integrated into the AAU.

Extended reality (extended reality, XR) and cloud gaming (cloud gaming, CG) are important application scenarios of 5G. XR is a general term for different types of reality (reality), and refers to a real and virtual combined environment and human-machine interaction generated by using a computer or a wearable device. XR types include augmented reality (augmented reality, AR), mixed reality (mixed reality, MR), virtual reality (virtual reality, VR), and the like.

XR and CG services are transmitted in a manner of a video frame (video frame). The video frame may also be referred to as a scene frame (scene frame), or may also be referred to as a slice (slice). Information included in one video frame forms one scene. A frame per second (frame per second, FPS) represents a quantity of video frames generated per second. Generally, a frame per second of the XR and CG services may be 30 FPS, 60 FPS, 90 FPS, or 120 FPS. For example, 60 FPS indicates that 60 video frames are generated per second.

Downlink service transmission is used as an example. A transmission process of XR and CG service data is roughly as follows: An XR or CG server performs processing such as logical calculation, content rendering, and coding on a video frame, and then sends the video frame to a core network device. The core network device transmits the video frame to a radio access network (radio access network, RAN) device, and the radio access network device transmits the video frame to UE through an air interface. A size of the video frame is not fixed, and sizes of different video frames may change. In a network transmission process, one video frame may be divided into one or more internet protocol (internet protocol, IP) packets (packets) for transmission. According to sizes of different IP packets, one IP packet may be divided into a plurality of transport blocks (transport blocks, TB) and transmitted to the UE over the air interface. Generally, one TB occupies one slot (slot) or several symbols (symbols) in one slot, and one TB may be repeatedly sent in a plurality of slots or on different symbols.

Another characteristic of the XR service and the CG service is that a time at which the video frame arrives at the network device is quasi-periodic. The period is a reciprocal of the frame per second, that is, 1/FPS. For example, if the frame per second is 60 FPS, the period is 1/60 seconds, which is about 16.67 ms (ms). The quasi-periodic means that a video frame between the network device and the UE is not transmitted strictly based on a period, but fluctuates in a specific time range, which is caused by factors such as rendering, coding, and a core network.

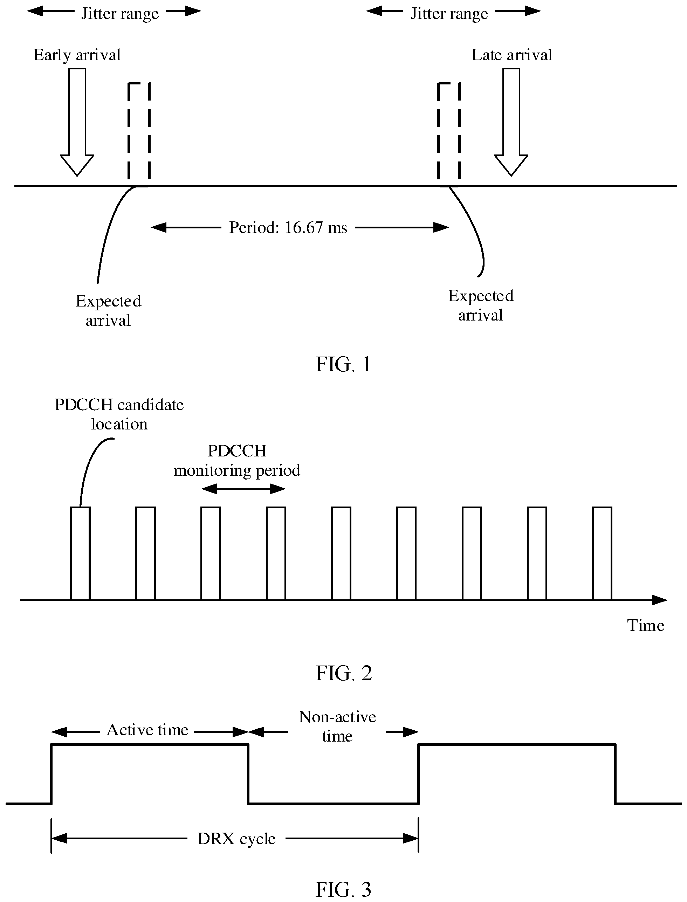

FIG. 1 is a schematic diagram in which a video frame arrives at a network device early or arrives at a network device late. Based on an expected arrival (expected arrival), different video frames may arrive at the network device early or may arrive at the network device later. A jitter in terms of time complies with a specific probability distribution in statistics. For example, the jitter in terms of time complies with a Gaussian distribution with a mean value of 0 and a variance of 2, and a jitter range is [-4, 4] ms. A negative value indicates that the video frame arrives early, and a positive value indicates that the video frame arrives late.

For application scenarios of XR and CG, saving power consumption of a terminal device is an important aspect of improving user experience. The XR/CG service is quasi-periodic, and data is not always transmitted. Therefore, if a terminal device that receives the XR/CG service is in a state of monitoring a physical downlink control channel (physical downlink control channel, PDCCH) for a long time, power consumption of the terminal device is excessively high. This is because the terminal device needs to blindly detect the PDCCH to obtain scheduling information of uplink data/downlink data, and receive a physical downlink shared channel (physical downlink shared channel, PDSCH) or send a physical uplink shared channel (physical uplink shared channel, PUSCH) based on the scheduling information carried on the PDCCH. If the network device does not need to perform data scheduling, and the network device does not send the PDCCH to the UE, blindly detecting the PDCCH causes a waste of power consumption for the terminal device.

To facilitate understanding of embodiments of this application, a PDCCH monitoring mechanism and an existing method for reducing power consumption of the terminal device are briefly described.

1. PDCCH monitoring mechanism

One function of the PDCCH is to carry uplink scheduling information or downlink scheduling information. The UE needs to periodically monitor the PDCCH to obtain scheduling information, and a period may be one slot. If it is detected that there is the scheduling information on the PDCCH, for the downlink scheduling information, the UE may receive data by using the PDSCH based on the scheduling information; and for the uplink scheduling information, the UE sends data over the PUSCH based on the scheduling information. The PDCCH may be further used to carry information such as an uplink power control command word and a slot format. PDCCHs carrying different control information may be scrambled by using different radio network temporary identifiers (radio network temporary identifiers, RNTIs).

One search space set (search space set, SS set) may be used to define a group of PDCCH candidates (PDCCH candidates). FIG. 2 is a schematic diagram of a group of PDCCH candidates. A network device may configure at least one search space set (search space set, SS set) for the UE. The UE monitors the PDCCH based on the SS set. For example, the UE monitors the PDCCH based on configuration information of the SS set.

For example, configuration information of each SS set may include at least one of the following parameters:

(1) an SS set identifier: identifies the SS set;
(2) a control resource set (control resource set, CORESET) identifier associated with the SS set, where a CORESET represents a time-frequency resource set used to carry the PDCCH, and one CORESET is formed by several consecutive or non-consecutive resource blocks (resource block, RB) in frequency domain and is formed by one or more consecutive symbols in time domain. For example, the UE may monitor, based on a parameter of the SS set, for example, a monitoring period, an offset, or a monitoring pattern, the PDCCH on the CORESET associated with the SS set;
(3) a PDCCH monitoring period $K_s$ and an offset $O_s$, where a value unit may be a slot (slot), $K_s \geq 1$, and a value range of Os is 0 to Ks-1;

(4) a PDCCH monitoring pattern (pattern) in a slot, or also referred to as a PDCCH monitoring symbol in a slot: indicates a start symbol that is of the CORESET associated with the SS set and that is for monitoring the PDCCH in the slot. A 14-bit bitmap is used for identification, and a most significant bit represents a 1st OFDM symbol in a slot. For example, "10000000000000" indicates that the 1st OFDM symbol in the slot is a start symbol for monitoring the PDCCH in the slot, and a symbol length for monitoring the PDCCH is determined by a symbol length of the CORESET associated with the SS set;

(5) duration Ts: indicates a quantity of consecutive slots in the SS set. Ts is less than or equal to Ks, and a value of Ts may be one slot. For example, it may be understood as a quantity of slots in which the PDCCH is continuously monitored in the PDCCH monitoring period Ks. For example, Ts=2 indicates that the PDCCH is monitored in two consecutive slots in the PDCCH monitoring period;

(6) an aggregation level and a quantity of PDCCH candidates (PDCCH candidates) corresponding to each aggregation level; and

(7) an SS set type indication: indicates that the SS set is a common search space set (common search space set, CSS set), which may be referred to as a CSS for short, or a user-specific search space set (UE-specific search space set, USS set), which may be referred to as a USS for short. If a type of the SS set is the CSS, the network device also configures a downlink control information (downlink control information, DCI) format (format) for monitoring at a PDCCH candidate location, for example, may be a DCI format 0_0, a DCI format 1_0, a DCI format 2_0, a DCI format 2_1, a DCI format 2_2, a DCI format 2_3, a DCI format 2_4, a DCI format 2_5, or a DCI format 2_6. If a type of the SS set is USS, the network device also configures a DCI format for monitoring at a PDCCH candidate location, for example, may be a DCI format 0_0, a DCI format 1_0, a DCI format 0_1, a DCI format 1_1, a DCI format 0_2, a DCI format 1_2, a DCI format 3_0, or a DCI format 3_1.

The UE may determine a PDCCH monitoring occasion (monitoring occasion, MO)/PDCCH candidate location based on the PDCCH monitoring period, the offset, the PDCCH monitoring pattern in the slot, and the like in the foregoing parameters, as shown in FIG. 2. In this application, that the UE monitors the PDCCH means that the UE monitors the PDCCH at the PDCCH candidate location.

2. Connected mode discontinuous reception (connected mode discontinuous reception, C-DRX) mechanism

C-DRX represents a DRX mechanism in connected mode, and therefore may also be referred to as DRX for short in the connected mode. In the C-DRX mechanism, the terminal device may periodically start a receiver to monitor the PDCCH based on a DRX cycle (DRX cycle) configured by the network device. FIG. 3 is a schematic diagram of one C-DRX cycle. The DRX cycle usually includes two time periods: an active time (active time) and a non-active time (non-active time). The terminal device monitors a PDCCH on a PDCCH monitoring occasion in the active time, and may be in a sleep state and not monitor the PDCCH in the non-active time, thereby reducing power consumption of the terminal.

It should be noted that, the C-DRX mechanism is mainly used to control the following RNTI-scrambled PDCCHs: a cell radio network temporary identifier (cell-RNTI, C-RNTI), a cancellation indication RNTI (cancellation indication-RNTI, CI-RNTI), a configured scheduling RNTI (configured scheduling-RNTI, CS-RNTI), an interruption RNTI (interruption-RNTI, INT-RNTI), a slot format indication RNTI (slot format indication-RNTI, SFI-RNTI), semi-persistent-channel state information RNTI (semi-persistent-channel state information-RNTI, SP-CSI-RNTI), transmit power control-physical uplink control channel RNTI (transmit power control-physical uplink control channel-RNTI, TPC-PUCCH-RNTI), transmit power control-physical uplink shared channel RNTI (transmit power control-PUSCH-RNTI, TPC-PUSCH-RNTI), transmit power control-sounding reference signal RNTI (transmit power control-sounding reference signal-RNTI, TPC-SRS-RNTI), and an availability indication RNTI (availability indication-RNTI, AI-RNTI). In other words, in the non-active time, the UE does not monitor the foregoing RNTI-scrambled PDCCHs. The C-DRX mechanism does not apply to RNTI-scrambled PDCCHs such as a system information RNTI (system information-RNTI, SI-RNTI), a random access RNTI (random access-RNTI, RA-RNTI), a message B RNTI (message B-RNTI, MsgB-RNTI), and a temporary cell RNTI (temporary cell-RNTI, TC-RNTI).

The active time includes at least a running time of an on-duration timer (drx-onDurationTimer). The network device may configure a length of drx-onDurationTimer for the terminal device by using radio resource control (radio resource control, RRC) signaling.

The DRX cycle may include a long discontinuous reception cycle (Long DRX cycle) and a short discontinuous reception cycle (short DRX cycle), where the short DRX cycle is an optional configuration. Unless otherwise specified in the following, the DRX cycle may be a long DRX cycle or a short DRX cycle. The long discontinuous reception cycle (Long DRX cycle) is used as an example. The network device further configures a parameter drx-LongCycle of a length of the long DRX cycle, a parameter drx-StartOffset used to determine a subframe at which the DRX cycle starts, and a parameter drx-SlotOffset of a time offset before drx-onDurationTimer is started in the subframe at which the DRX cycle starts. If the long DRX cycle is used, when a subframe number (subframe number) meets the formula (1), the terminal starts drx-onDurationTimer (which may also be briefly referred to as onDurationTimer below):

$$[(SFN \times 10) + \text{subframe number}] \text{ modulo } (\text{drx-LongCycle}) = \text{drx-StartOffset} \quad (1)$$

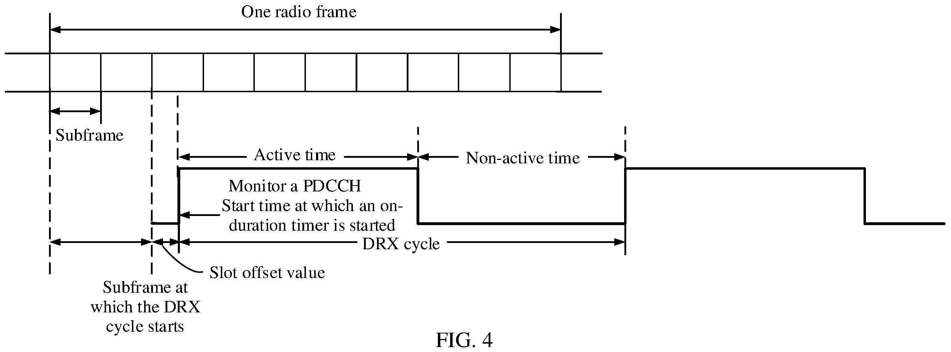

Herein, SFN is a system frame number, and modulo represents a modulo operation. A system frame may also be referred to as a radio frame. One radio frame is 10 ms, one radio frame may include a plurality of subframes (subframe), and each subframe includes one or more slots. In other words, onDurationTimer is started after a start subframe of the long DRX cycle is delayed by drx-SlotOffset. FIG. 4 is a schematic diagram of a relationship between starting onDurationTimer and drx-SlotOffset and drx-StartOffset.

If the short discontinuous reception cycle (short DRX cycle) is used, when a subframe number (subframe number) meets the formula (2), the terminal device starts drx-onDurationTimer:

$$[(SFN \times 10) + \text{subframe number}] \text{ modulo } (\text{drx-ShortCycle}) = (\text{drx-StartOffset}) \text{ modulo } (\text{drx-ShortCycle})$$

In other words, onDurationTimer is started after a start subframe of the short DRX cycle is delayed by drx-SlotOffset.

It can be learned from the foregoing description that after the network device configures the C-DRX parameter, a time location at which the terminal device periodically starts onDurationTimer is fixed, and the time location of onDurationTimer cannot be dynamically adjusted in real time.

Optionally, in the C-DRX mechanism, the active time may further include: a running time of a discontinuous reception-inactivity timer (drx-InactivityTimer), a running time of a discontinuous reception-downlink (downlink, DL) retransmission timer (drx-RetransmissionTimerDL), and a running time of a discontinuous reception-uplink (uplink, UL) retransmission timer (drx-RetransmisionTimerUL). In the following, drx-InactivityTimer is short for InactivityTimer, drx-RetransmissionTimerDL is short for RetransmissionTimerDL, and drx-RetransmisionTimerUL is short for RetransmisionTimerUL. The C-DRX parameter configured by the network device for the terminal device by using RRC signaling may be specifically shown in Table 1. A triggering condition for starting drx-InactivityTimer, drx-RetransmissionTimerDL, and drx-RetransmisionTimerUL is shown in Table 1. To be specific, the three timers are started only when data is transmitted.

Table 1

| C-DRX parameter | Description |
| --- | --- |
| drx-SlotOffset | indicates a time offset before drx-onDurationTimer is started. |
| drx-LongCycleStartOffset | includes two parameters drx-LongCycle and drx-StartOffset, where drx-LongCycle indicates duration of a long DRX cycle, and drx-StartOffset is used to determine a time at which the DRX cycle starts. |
| drx-ShortCycle | indicates duration of a short DRX cycle. The short DRX cycle is optional. When drx-ShortCycle is configured, the long DRX cycle and the short DRX cycle can be switched. |
| drx- ShortCycleTimer | indicates duration of the short DRX cycle used by UE. This parameter is optional. |
| drx-onDurationTimer | indicates duration in which the DRX cycle starts, and a PDCCH is monitored in the duration of the timer. |
| drx-InactivityTimer | When it is detected that the PDCCH indicates initial transmission of UL or DL, the timer is started (or restarted), and the PDCCH continues to be monitored in the duration of the timer. It can be understood that drx-InactivityTimer prolongs an active time of the DRX cycle. |
| drx-hybrid automatic repeat request (hybrid automatic repeat request, HARQ)-round-trip time (round-trip time, RTT)-TimerDL | indicates a minimum time length that the UE needs to wait before DL retransmission scheduling may be received. Each downlink hybrid automatic repeat request (DL HARQ process) process corresponds to one timer. |

(continued)

| C-DRX parameter | Description |
|---|---|
|  | If it is detected that the PDCCH indicates downlink scheduling, the timer corresponding to the HARQ process is started after a PDSCH is decoded and a HARQ feedback is sent. |
| drx-HARQ-RTT-TimerUL | indicates a minimum time length that the UE needs to wait before UL retransmission scheduling may be received. Each UL HARQ process corresponds to one timer. If it is detected that the PDCCH indicates uplink scheduling, the timer corresponding to the HARQ process is started after a transport block is transmitted on a PUSCH (or a transport block is transmitted for the first time when the transport block is repeatedly transmitted on a PUSCH). |
| drx-RetransmissionTimerDL | indicates a maximum time length that the UE expects to receive DL retransmission scheduling. Each DL HARQ process corresponds to one timer. If drx-HARQ-RTT-TimerDL expires and a PDSCH corresponding to the HARQ process is not correctly decoded, drx-RetransmissionTimer DL of the process is started. |
| drx-RetransmisionTimerUL | indicates a maximum time length that the UE expects to receive UL retransmission scheduling. Each UL HARQ process corresponds to one timer. If drx-HARQ-RTT-TimerUL expires, drx-RetransmissionTimerUL of a corresponding HARQ process is started. |

The active time may further include: a running period of a random access-contention resolution timer (ra-ContentionResolutionTimer) or message B-response window (msgB-response window), a pending (pending) period after the UE sends a scheduling request (scheduling request, SR) on the PUCCH, and a period during which the UE does not receive a PDCCH indicating new transmission after successfully receiving a random access response (random access response, RAR) based on non-contention-based random access.

3. Search space set group (search space set group, SSSG) switching mechanism

The network device may configure a plurality of SS sets for one bandwidth part (bandwidth part, BWP), and may group the SS sets, and may specifically be grouped into two groups (group) or more groups. For example, the SS sets are grouped into two SSSGs. In configuration information of the SS set, it may be configured whether the SS set belongs to a first group, for example, an SSSG 0, or belongs to a second group, for example, an SSSG 1. Alternatively, one SS set may be allowed to belong to a plurality of SSSGs. For example, the SS set belongs to both the SSSG 0 and the SSSG 1. For an SS set for which an SSSG index is configured, the UE needs to monitor a PDCCH based on only an SS set of one of the SSSGs. As described above, PDCCH monitoring occasions of different sparse degrees may be implemented for each SSSG by using the configuration information of the SS set.

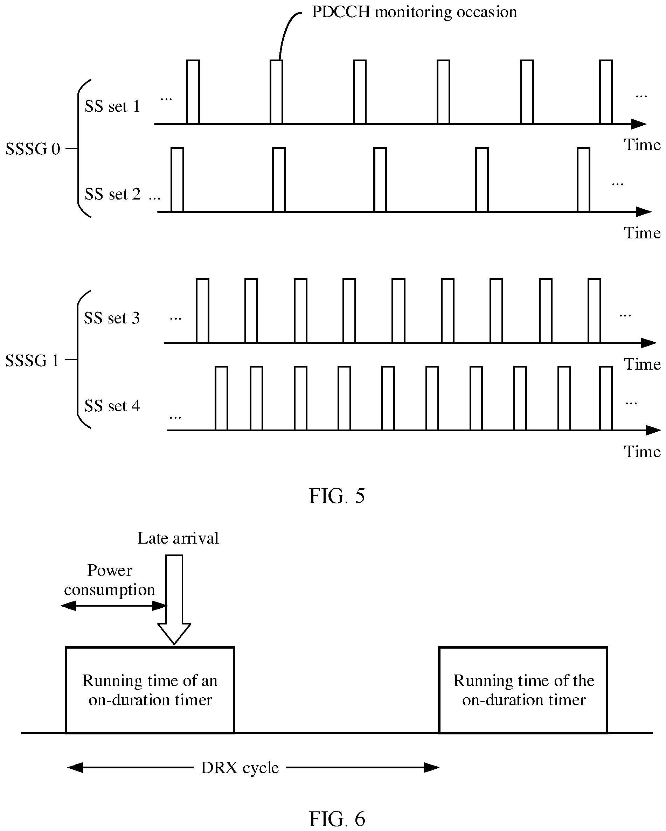

FIG. 5 is a schematic diagram of two different SSSGs. SS sets associated with the different SSSGs may have different PDCCH monitoring occasions (candidate locations). When PDCCH monitoring occasions in an SSSG to which UE is switched are sparse, for example, an SSSG 0 in FIG. 5, the UE monitors a PDCCH based on an SS set belonging to the SSSG 0, and does not need to monitor the PDCCH based on an SS set belonging to an SSSG 1. Because the PDCCH monitoring occasions of the SS set belonging to the SSSG 0 are sparse, power consumption can be reduced.

The network device and the UE may dynamically switch the SSSG, and may explicitly indicate SSSG switching by using a bit field in DCI or implicitly indicate SSSG switching by using the DCI. Two SSSGs are used as an example, and the two SSSGs are an SSSG 0 and an SSSG 1. The explicit indication of the bit field in the DCI may include: when the indication of the bit field in the DCI is "0", the UE switches to the SSSG 0, that is, monitors the PDCCH based on the SS set of the SSSG 0, and stops monitoring the PDCCH based on the SS set of the SSSG 1; or when the indication of the field is "1", the UE switches to the SSSG 1, that is, monitors the PDCCH based on the SS set of the SSSG 1, and vice versa. The DCI implicit indication may include: if the UE is monitoring the PDCCH based on the SS set in the SSSG with sparse PDCCH monitoring occasions, when the UE detects any DCI format (format) or detects a specific DCI format, the UE switches from the SSSG with the sparse PDCCH monitoring occasions to an SSSG with dense PDCCH monitoring occasions. The UE may further automatically switch the SSSG after a period of time. For example, the UE monitors the PDCCH based on the SS set belonging to the SSSG 0, and after a period of time, the UE switches to the SSSG 1, and vice versa. The period of time may be implemented by using a timer. For example, the UE starts a timer when monitoring the PDCCH based on the SS set belonging to the SSSG 0. When the timer expires, the UE monitors the PDCCH based on the SS set belonging to the SSSG 1.

An XR/CG service requires low delay and high reliability. In addition, considering jittery of the XR/CG service in terms of time, the C-DRX mechanism is used. A long running time of onDurationTimer needs to be configured to cover a jitter of a video frame of the XR/CG. 60 FPS is used an example. The DRX cycle needs to be configured to 16 ms. Considering that a jitter range is [-4, 4] ms, a running time length of onDurationTimer needs to be set to 8 ms. FIG. 6 is a schematic diagram in which a video frame arrives late. Because the video frame arrives late, and UE needs to perform PDCCH blind detection when an on-duration timer (onDurationTimer) is started, a waste of power consumption is caused.

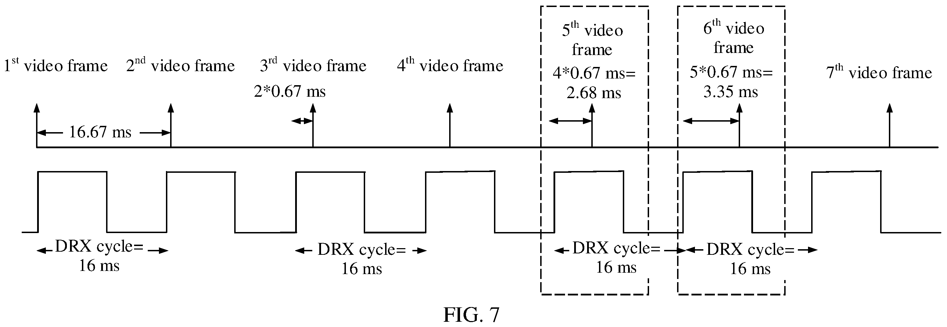

A period of an XR/CG service is a reciprocal of a frame per second, and the period of the XR/CG service is usually a non-integer. For example, if the frame per second is 60 FPS, a corresponding period is approximately 16.67 ms; and if the frame per second is 120 FPS, a corresponding period is approximately 8.33 ms. Because the DRX cycle is usually an integer, and without considering a jitter in terms of time, it is difficult to match the period of the XR/CG service with a DRX cycle. FIG. 7 is a schematic diagram in which a network device sends a video frame based on a DRX cycle. 60 FPS is used as an example. Assuming that onDurationTimer is 4 ms, after six DRX cycles, an arrival time of a video frame of XR/CG falls within a non-active time of the DRX, and the network device can only wait for an active time of a next DRX cycle to perform scheduling, thereby increasing a delay. If the delay is excessively long, a packet loss may be caused, thereby affecting user experience. In addition, different XR/CG devices may support different frame per seconds, and a new DRX cycle length is introduced for each type of frame per second. This method is not flexible enough.

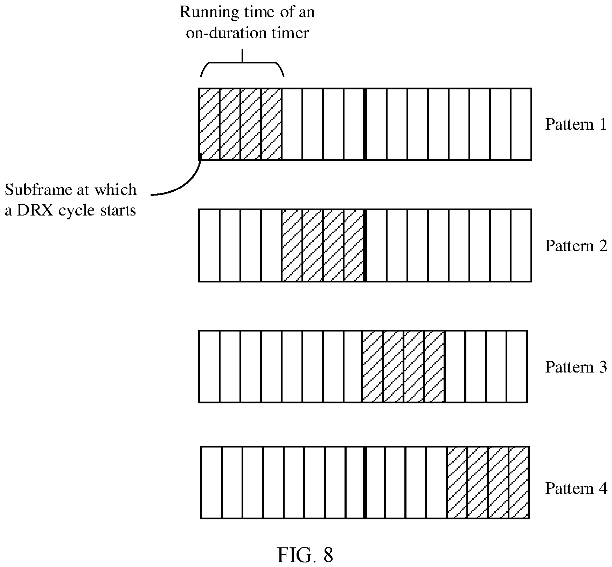

In an implementation, the DRX cycle is divided into several non-overlapping patterns (pattern) based on a time length of onDurationTimer, that is, there are N types of patterns, where N meets the following formula (3). If the division is not exact, the result may be rounded up or rounded down. Assuming that the DRX cycle is 16 ms and onDurationTimer is 4 ms, there are four patterns, that is, there are four drx-StartOffsets. The network device may indicate, by using the DCI, a pattern used in a subsequent DRX cycle. FIG. 8 is a schematic diagram of dividing a DRX cycle into four non-overlapping patterns.

$$N = \frac{DRXcycle \text{ length}}{onDurationTimer \text{ length}} \quad (3)$$

When one of the patterns, for example, a pattern 1, is used, there may be an IP packet only when onDurationTimer is about to end, for example, a part in a dashed box in FIG. 7. In this case, due to reasons such as a network device scheduler, a network device may not be able to send DCI in current onDurationTimer for scheduling, and may only send the DCI in onDurationTimer of a next DRX cycle for scheduling. Start times of onDurationTimer in different patterns do not overlap. Therefore, even if UE switches to another pattern, the IP packet may still fall outside onDurationTimer.

Embodiments of this application provide an information monitoring method, to reduce power consumption of a terminal device.

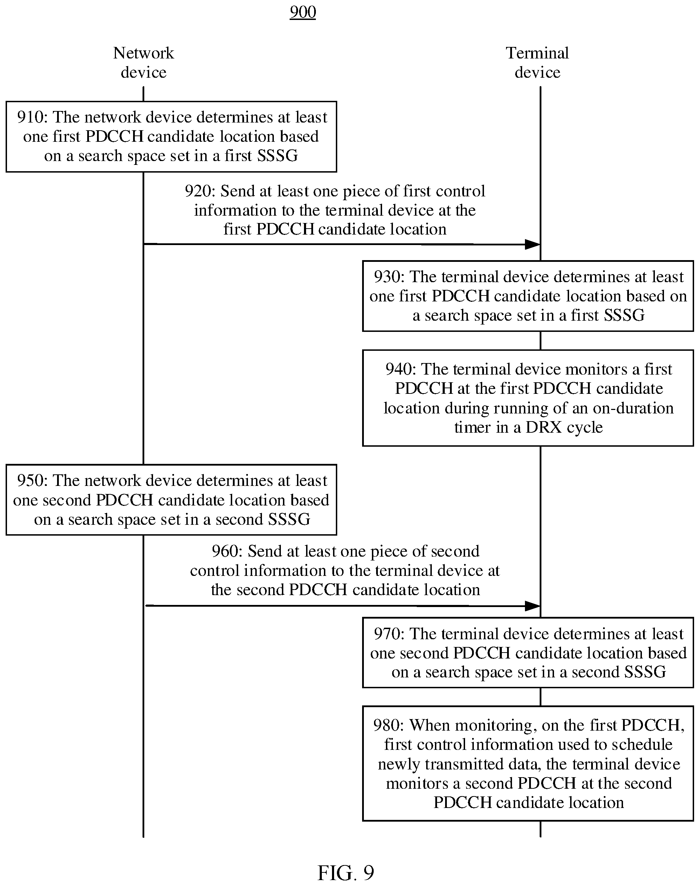

FIG. 9 is a schematic interaction flowchart of an information monitoring method 900 according to an embodiment of this application.

A network device may configure a C-DRX parameter, configuration information of a search space set SS set, and grouping information of the SS set. The C-DRX parameter may be understood as configuration information of DRX. In this embodiment of this application, the network device may be a base station. The C-DRX parameter includes the parameters in Table 1.

910: The network device determines at least one first PDCCH candidate location based on a search space set in a first SSSG.

920: The network device determines a running time of an on-duration timer in a DRX cycle based on the C-DRX parameter. The network device may send at least one piece of first control information to a terminal device at the first PDCCH candidate location during running of the on-duration timer in the DRX cycle.

For example, the control information may be DCI, and is used to schedule data carried on a PDSCH or a PUSCH. It should be understood that the step (that is, 920) of determining, by the network device, the running time of the on-duration timer in the DRX cycle and the step (that is, 910) of determining the at least one first PDCCH candidate location may be in no sequence.

930: The terminal device determines at least one first PDCCH candidate location based on a search space set in a first SSSG. There may be one or more search space sets belonging to the first SSSG.

940: The terminal device determines a running time of an on-duration timer in a DRX cycle based on the C-DRX parameter. The terminal device monitors a first PDCCH at the first PDCCH candidate location during running of the on-duration timer in the DRX cycle.

The first PDCCH may be used to carry the first control information. It should be understood that the step of determining, by the terminal device, the running time of the on-duration timer in the DRX cycle and the step of determining the at least one first PDCCH candidate location may be in no sequence.

It should be understood that 910 and 920 may be in no sequence, and 930 and 940 may also be in no sequence. In addition, 930 and 940 may be performed before 910, or 910 and 920 may be performed simultaneously with 930 and 940. This is not limited in this embodiment of this application.

It should be specially noted that, in step 920 and step 940, a method for determining the running time of the on-duration timer in the DRX cycle may be determined by using the foregoing described formula (1) or formula (2).

950: The network device determines at least one second PDCCH candidate location based on a search space set in a second SSSG.

960: When the first control information is used to schedule newly transmitted data, the network device starts an inactivity timer, and during running of the inactivity timer, the network device sends at least one piece of second control information to the terminal device at the second PDCCH candidate location.

It should be understood that the first control information may be control information used to schedule the newly transmitted data, or may be control information used to schedule retransmitted data, or may be control information used to indicate non-scheduling data, for example, group common DCI. It should be understood that the step of starting, by the network device, the inactivity timer and the step of determining the at least one second PDCCH candidate location may be performed in no sequence.

Before 910, the network device further configures the configuration information of the search space set SS set and the grouping information of the SS set, that is, an SSSG, for the terminal device. For the configuration information of the SS set, refer to the foregoing description. In the configuration information of the SS set, an SSSG index may be further configured to indicate an SSSG to which the SS set belongs. In this embodiment, when the configuration information of the SS set is configured, the SS set of the first SSSG and the SS set of the second SSSG meet at least one of the following.

A PDCCH period of the search space set of the first SSSG is greater than a PDCCH period of the search space set of the second SSSG. A longer PDCCH period indicates fewer PDCCH candidate locations that need to be monitored in a period of time.

Alternatively, duration of the search space set (SS set duration) in the first SSSG is less than duration of the search space set in the second SSSG, where the duration of the search space set may be understood as a quantity of slots in which a PDCCH is continuously monitored in each PDCCH monitoring period of the search space set.

Alternatively, a bandwidth of a CORESET associated with the search space set of the first SSSG is less than a bandwidth of a CORESET associated with the search space set of the second SSSG.

Alternatively, a quantity of PDCCH candidates in the search space set of the first SSSG is less than a quantity of PDCCH candidates in the search space set of the second SSSG. Specifically, the foregoing may be represented as that an aggregation level type in the search space set of the first SSSG is less than an aggregation level type in the search space set of the first SSSG; at a same aggregation level, a quantity of PDCCH candidates corresponding to the aggregation level in the search space set of the first SSSG is less than a quantity of PDCCH candidates corresponding to the aggregation level in the search space set of the second SSSG; a quantity of PDCCH candidates at the PDCCH candidate location determined based on the search space set of the first SSSG is less than a quantity of PDCCH candidates at the PDCCH candidate location determined based on the search space set of the second SSSG.

Alternatively, a quantity of PDCCH monitoring patterns in a slot of the search space set of the first SSSG is less than a quantity of PDCCH monitoring patterns in a slot of the search space set of the second SSSG. For example, the PDCCH monitoring pattern in the slot of the search space set of the first SSSG is located only on a start symbol of the slot, and the PDCCH monitoring pattern in the slot of the search space set of the second SSSG may be located on any symbol of the slot. In other words, a PDCCH candidate start location of the search space set of the first SSSG is located on the start symbol of the slot, and there are a plurality of PDCCH candidate start locations of the search space set of the second SSSG in the slot, and the plurality of PDCCH candidate start locations are located on different symbols.

Optionally, the search space set of the first SSSG may be a subset of the search space set of the second SSSG.

A start time at which the inactivity timer starts is determined based on a sending time of the first control information used to schedule the newly transmitted data. Therefore, a running time of the inactivity timer and the running time of the on-duration timer may partially overlap, that is, the two timers may run simultaneously; or the running time of the inactivity timer and the running time of the on-duration timer may not overlap.

970: The terminal device determines at least one second PDCCH candidate location based on a search space set in a second SSSG. There may be one or more SS sets belonging to the second SSSG.

980: When the terminal device monitors, on the first PDCCH, first control information used to schedule newly transmitted data, the terminal device monitors a second PDCCH at the second PDCCH candidate location during running of the inactivity timer, that is, the terminal device detects at least one piece of second control information at the second PDCCH candidate location.

Specifically, when the terminal device monitors, on the first PDCCH, the first control information used to schedule the newly transmitted data, the terminal device starts the inactivity timer, and monitors the second PDCCH at the second PDCCH candidate location during running of the inactivity timer. It should be understood that the step of starting, by the terminal device, the inactivity timer and the step of determining the at least one second PDCCH candidate location may be performed in no sequence.

It should be understood that 950 and 960 in the network device and 970 and 980 in the terminal device may be performed in no sequence.

In the technical solution provided in this embodiment of this application, when the on-duration timer in the DRX cycle starts to run, the terminal device monitors the first PDCCH based on the at least one first PDCCH candidate location belonging to the search space set of the first SSSG. When receiving the first control information used to schedule new transmission, the terminal device starts the inactivity timer. During running of the inactivity timer, the terminal device monitors the second PDCCH based on the at least one second PDCCH candidate location belonging to the search space set of the second SSSG. Before receiving the first control information used to schedule the newly transmitted data, the terminal device monitors the first PDCCH based on the first PDCCH candidate location with a long monitoring period or a small bandwidth of a CORESET, so that power consumption of the terminal device can be reduced. When receiving the first control information used to schedule the newly transmitted data, the terminal device monitors the second PDCCH based on the second PDCCH candidate location with a short monitoring period or a small bandwidth of a CORESET, so that a data transmission delay can be reduced. In the conventional technology, when the on-duration timer starts to run, the terminal device may monitor the PDCCH by using the search space set in the second SSSG, that is, monitor the PDCCH by using the short PDCCH period, but a moment at which data arrives at a network device is later than a moment at which the on-duration timer starts. As a result, the terminal device monitors the PDCCH based on the search space set in the second SSSG, resulting in a waste of power consumption. Therefore, compared with the conventional technology, the foregoing technical solution provided in this application can prevent the terminal device from monitoring the PDCCH by always using the short PDCCH monitoring period during running of the on-duration timer in the DRX cycle, thereby reducing power consumption of the terminal device. When the terminal device monitors the control information used to schedule the data, it may be considered that there is data that needs to be transmitted by the network device. In this case, the UE monitors the PDCCH by using a short PDCCH monitoring period, so that data transmission can be completed as soon as possible.

Optional, the network device may determine at least one third PDCCH candidate location based on the search space set in the second SSSG. The network device may send third control information to the terminal device at the third PDCCH candidate location during running of the on-duration timer in the DRX cycle. A time at which the third control information is sent is different from a time at which the first control information is sent. It should be understood that, during running of the on-duration timer in the DRX cycle, a time range in which the PDCCH is monitored by using the search space set of the second SSSG is different from a time range in which the PDCCH is monitored by using the search space set of the first SSSG.

Correspondingly, the terminal device may determine the at least one third PDCCH candidate location based on the search space set of the second SSSG. During running of the on-duration timer in the DRX cycle, the terminal device monitors the third PDCCH at the third PDCCH candidate location, that is, the terminal device detects at least one piece of third control information at the third PDCCH candidate location. A time at which the terminal device monitors the first PDCCH is different from a time at which the terminal device monitors the third PDCCH. It should be understood that a time range in which the terminal device monitors the first PDCCH based on the first PDCCH candidate location is different from a time range in which the terminal device monitors the third PDCCH based on the third PDCCH candidate location. In other words, during running of the on-duration timer in the DRX cycle, a time range in which the terminal device uses the second SSSG is different from a time range in which the terminal device uses the first SSSG.

A time for monitoring the first PDCCH may be referred to as a first time period, that is, a time period in which the first PDCCH is monitored based on the SS set of the first SSSG. A time for monitoring the third PDCCH may be referred to as a third time period, that is, a time period in which the third PDCCH is monitored based on the SS set of the second SSSG. A running period of the on-duration timer in the DRX cycle includes a first time period and a third time period, and the first time period and the third time period are different time periods. The terminal device monitors the first PDCCH in the first time period based on the SS set of the first SSSG, and monitors the third PDCCH in the third time period based on the SS set of the second SSSG. A jitter of data transmission of XR/CG in terms of time complies with a specific probability distribution. The first time period may be a time period in which no data is transmitted or less data is transmitted, and the third time period may be a time period in which data is transmitted or more data is transmitted. For example, the first time period may be a time period in which XR/CG service data does not arrive, and the third time period may be a time period in which the XR/CG service data arrives.

The first time period and the third time period may be predefined, or may be configured by the network device for the terminal device. In other words, a start time and/or a time length of the first time period and a start time and/or a time length of the third time period may be predefined, or may be configured by the network device.

For example, the network device sends first configuration information to the terminal device, where the first configuration information includes at least one of the following: a start time for monitoring the first PDCCH, a time length for monitoring the first PDCCH, a start time for monitoring the third PDCCH, or a time length for monitoring the third PDCCH. It should be understood that the start time for monitoring the first PDCCH, the time length for monitoring the first PDCCH, the start time for monitoring the third PDCCH, and the time length for monitoring the third PDCCH are respectively the start time of the first time period, the time length of the first time period, the start time of the third time period, and the time length of the third time period. The terminal device may receive first configuration information from the network device. The first configuration information may be included in the C-DRX parameter, or may be separately configured. The first configuration information may be sent by the network device by using RRC signaling, or may be indicated by DCI sent by the network device in a previous DRX cycle or a MAC CE carried on the PDSCH.

An offset between the start time for monitoring the first PDCCH and the start time at which the on-duration timer in the DRX cycle is started, a start time of the DRX cycle, or a subframe at which the DRX cycle starts is denoted as a first offset value (offset). The first offset value may be equal to 0, may be configured by the network device, or may be predefined in a protocol. Alternatively, it may be directly predefined that the start time for monitoring the first PDCCH is the same as the start time at which the on-duration timer is started in the DRX cycle.

The time length for monitoring the first PDCCH or the time length for monitoring the third PDCCH may be related to a length of the on-duration timer or a size of the DRX cycle. Specifically, the time length for monitoring the first PDCCH may be represented as delta1*onDurationTimer, where $0 \leq delta1 \leq 1$; or the time length for monitoring the first PDCCH may be represented as delta2*DRX cycle, where $delta2 \geq 0$. Similarly, the time length for monitoring the third PDCCH may be represented as delta3*onDurationTimer, where $0 \leq delta3 \leq 1$; or the time length for monitoring the third PDCCH may also be represented as delta4*DRX cycle, where $delta4 \geq 0$. The time length for monitoring the first PDCCH does not exceed the running time of the on-duration timer. For example, the time length for monitoring the first PDCCH may be equal to the running time of the on-duration timer.

For example, the time length for monitoring the first PDCCH and the time length for monitoring the third PDCCH may be predefined. The first configuration information received by the terminal device may include only the start time for monitoring the first PDCCH. Because the time length for monitoring the first PDCCH is predefined, a time for monitoring the first PDCCH may be determined. A time other than the time for monitoring the first PDCCH during running of the on-duration timer may be determined as a time for monitoring the third PDCCH. The first configuration information received by the terminal device may include only the start time for monitoring the third PDCCH, and a time other than the time for monitoring the third PDCCH during running of the on-duration timer may be determined as the time for monitoring the first PDCCH. The first configuration information received by the terminal device may also include the start time for monitoring the first PDCCH and the start time for monitoring the third PDCCH.

For example, it may be predefined that the start time for monitoring the first PDCCH is the same as the start time for monitoring the on-duration timer in the DRX cycle. The first configuration information received by the terminal device may include only the time length for monitoring the first PDCCH, and a time other than the time for monitoring the first PDCCH during running of the on-duration timer may be determined as the time for monitoring the third PDCCH. The first configuration information received by the terminal device may include the time length for monitoring the first PDCCH and the time length for monitoring the third PDCCH, and the start time for monitoring the third PDCCH may be an end time for monitoring the first PDCCH.

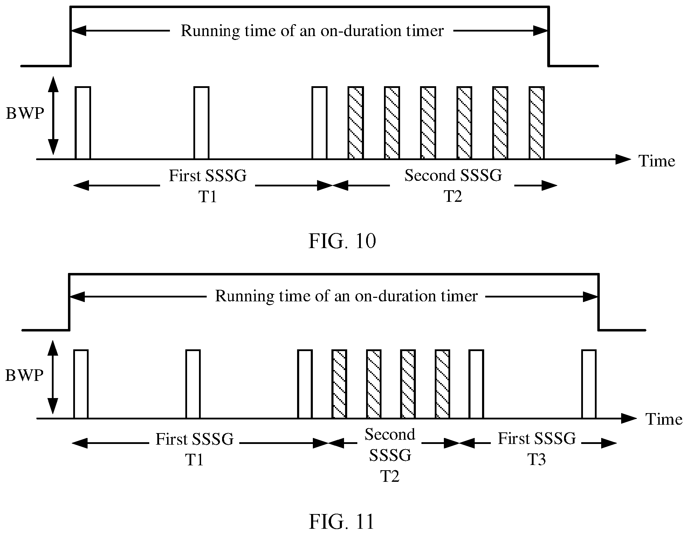

FIG. 10 is a schematic diagram of monitoring different PDCCHs in a first time period and a third time period respectively based on different SSSGs during running of an on-duration timer. In a time period T1 (a first time period), the terminal device is in a low power consumption state at a first PDCCH candidate location belonging to a search space set of a first SSSG. In a time period T2 (a third time period), the terminal device is in a high power consumption state at a third PDCCH candidate location belonging to a search space set of a second SSSG.

Optionally, the first time period may be inconsecutive, and the third time period may also be inconsecutive. FIG. 11 is another schematic diagram of monitoring different PDCCHs in a first time period and a third time period respectively based on different SSSGs during running of an on-duration timer. The first time period includes discontinuous time periods T1 and T3. In the time periods T1 and T3, the terminal device is in a low power consumption state at a first PDCCH candidate location belonging to a search space set of a first SSSG. In a time period T2 (a third time period), the terminal device is in a high power consumption state at a third PDCCH candidate location belonging to a search space set of a second SSSG.

Optionally, the network device may configure a plurality of first time periods for the terminal device, and the network device may indicate, by using a media access control control element (Medium Access Control control element, MAC CE) or DCI, which first time period is used. As shown in Table 2, the plurality of first time periods configured by the network device for the terminal device are shown.

**Table 2**

| Time periods in which the first PDCCH is monitored based on the search space set of the first SSSG |
|---|
| T1_1 |
| T1_2 |
| T1_3, T3_1 |
| T1_4, T3_2 |

Optionally, the network device may further configure or indicate a bitmap for the terminal device. Each bit in the bitmap corresponds to one time unit, and indicates that the first PDCCH is monitored in the time unit based on the search space set of the first SSSG or the third PDCCH is monitored in the time unit based on the search space set of the second SSSG.

Based on the foregoing solution, during running of the on-duration timer in the DRX cycle, the first time period may be a time period in which no data is transmitted or less data is transmitted. In the first time period, the terminal device monitors the first PDCCH at the first PDCCH candidate location belonging to the search space set of the first SSSG. The third time period may be a time period in which data is transmitted or more data is transmitted. In the third time period, the terminal device monitors the third PDCCH at the third PDCCH candidate location belonging to the search space set of the second SSSG. This can avoid that the terminal device keeps monitoring the PDCCH based on a PDCCH candidate location with a short monitoring period or a small bandwidth of the CORESET when no service is transmitted or less service is transmitted, thereby reducing power consumption of the terminal device.

To further reduce power consumption of the terminal device, the network device may further configure or indicate a minimum scheduling offset (minimum scheduling offset) value for the terminal device. The minimum scheduling offset value may include K0min and/or K2min. K0min is used to restrict a time offset value between the PDCCH and the PDSCH when the DCI carried on the PDCCH schedules the PDSCH, that is, the time offset value between the PDCCH and the PDSCH is not less than K0min. K2min is used to restrict a time offset value between the PDCCH and the PUSCH when the DCI carried on the PDCCH schedules the PUSCH, that is, the time offset value between the PDCCH and the PUSCH is not less than K2min. The time offset value may be a slot offset value, and the minimum scheduling offset value may be a minimum scheduling slot offset value.

Optionally, the first SSSG and the second SSSG are separately associated with one minimum scheduling offset value. For example, the network device configures or indicates, to the terminal device, a first minimum scheduling offset value associated with the first SSSG and a second minimum scheduling offset value associated with the second SSSG. When the terminal device monitors the first PDCCH at the first PDCCH candidate location, a first scheduling offset value is greater than or equal to a first threshold, where the first scheduling offset value is a time offset value between the first PDCCH and a physical downlink shared channel PDSCH or a physical uplink shared channel PUSCH scheduled by the first PDCCH, and the first threshold may be understood as the first minimum scheduling offset value. When the terminal device monitors the second PDCCH at the second PDCCH candidate location, a second scheduling offset value is greater than or equal to a second threshold, where the second scheduling offset value is a time offset value between the second PDCCH and a PDSCH or a PUSCH scheduled by the second PDCCH, the first threshold is greater than the second threshold, and the second threshold may be understood as the second minimum scheduling offset value. When the terminal device monitors the third PDCCH at the third PDCCH candidate location, a third scheduling offset value is greater than or equal to the second threshold, where the third scheduling offset value is a time offset value between the third PDCCH and a PDSCH or a PUSCH scheduled by the third PDCCH. For example, the first threshold is greater than 0, and the second threshold is equal to 0. When the first threshold is greater than 0, when monitoring the PDCCH, the terminal device does not need to buffer a PDSCH that may exist in a slot in which the PDCCH is located, and the terminal device may further prolong a PDCCH processing time, that is, the terminal device may reduce a clock frequency and a voltage, thereby reducing power consumption of the terminal device.

Optionally, data is not always transmitted during running of the inactivity timer. Therefore, refer to the foregoing method. The network device configures or indicates, to the terminal device, a time period in which the PDCCH is monitored based on the SS set of the first SSSG during running of the inactivity timer. The terminal device monitors the PDCCH based on a search space set with a long monitoring period or a small CORESET bandwidth in the time period, so that power consumption of the terminal device can be reduced.

Optionally, if the terminal device detects downlink DCI, after sending a HARQ feedback, the terminal device starts HARQ-RTT-TimerDL of a corresponding HARQ process. If HARQ-RTT-TimerDL expires and a PDSCH of the HARQ process is not correctly decoded, the UE starts RetransmissionTimerDL of the corresponding HARQ process after HARQ-RTT-TimerDL expires, and continues to monitor the PDCCH based on the search space set of the first SSSG or the second SSSG in RetransmissionTimerDL. Optionally, refer to the foregoing method. The network device configures or indicates, to the terminal device, a time period in which the PDCCH is monitored based on the SS set of the first SSSG in HARQ-RTT-TimerDL. The terminal device monitors the PDCCH based on a search space set with a long monitoring period or a small CORESET bandwidth in the time period, so that power consumption of the terminal device can be reduced.

Optionally, if the UE detects uplink DCI, the UE starts HARQ-RTT-TimerUL of the HARQ process after a transport block is transmitted on a PUSCH scheduled by using the DCI (or a transport block is transmitted for the first time when the transport block is repeatedly transmitted on a PUSCH). If HARQ-RTT-TimerUL expires, Retransmission-TimerUL of a corresponding process is started after HARQ-RTT-TimerUL expires, and the PDCCH continues to be monitored in RetransmissionTimerUL based on the search space set of the first SSSG or the search space set of the second SSSG. Optionally, refer to the foregoing method. The network device configures or indicates, to the terminal device, a time period in which the PDCCH is monitored based on the SS set of the first SSSG in HARQ-RTT-TimerUL. The terminal device monitors the PDCCH based on a search space set with a long monitoring period or a small CORESET bandwidth in the time period, so that power consumption of the terminal device can be reduced.

In a multi-carrier scenario, a first SSSG and a second SSSG may be separately configured for a primary cell (primary cell, PCell) and secondary cells (secondary cells, SCells), and an SSSG used to monitor a PDCCH in each cell during running of onDurationTimer may be determined according to the foregoing method. Optionally, when the UE monitors a PDCCH in the PCell based on an SS set of the first SSSG, the UE monitors a PDCCH in an activated SCell based on the SS set of the first SSSG. To further reduce power consumption of the terminal, it may be further specified that the first SSSG is configured for the secondary cell as an SSSG that does not monitor the PDCCH. For example, the first SSSG in the secondary cell does not include any SS set, and there is no PDCCH monitoring occasion. When the UE monitors the PDCCH in the PCell based on the SS set belonging to the first SSSG, the UE stops monitoring the PDCCH in the activated SCell, or the UE switches to the first SSSG in the activated SCell.

Because a period of an XR/CG service does not match the DRX cycle, an arrival time of a video frame of the XR/CG may fall within a non-active time of the DRX, and the network device can perform scheduling only after an active time of a next DRX cycle. As a result, a data transmission delay is increased, and user experience is affected. Therefore, this embodiment of this application further proposes that the start time of the DRX cycle and/or the start time of the on-duration timer in the DRX cycle are/is dynamically adjusted, so that an arrival time of the data that needs to be transmitted can be prevented from falling within the non-active time of the DRX, and the data transmission delay can be reduced.

In an implementation, the network device is also configured to determine, based on the C-DRX parameter, a start time of an $i^{th}$ DRX cycle and/or a start time at which the on-duration timer is started in the $i^{th}$ DRX cycle, where i is a positive integer. The network device determines a first parameter m and a second parameter T, where m is a positive integer. The first parameter m may be a quantity of DRX cycles between which a start time of the DRX cycle is periodically adjusted; the first parameter m may be a quantity of DRX cycles between which the start time of the on-duration timer in the DRX cycle is periodically adjusted; or the first parameter may be a quantity of DRX cycles between which the start time of the DRX cycle is periodically adjusted and between which the start time of the on-duration timer in the DRX cycle is periodically adjusted. The second parameter T may be an offset value for adjusting the start time of the DRX cycle and/or an offset value for adjusting the start time at which the on-duration timer is started in the DRX cycle. The network device determines, based on the C-DRX parameter, the first parameter m, and the second parameter T, a start time of an $(i+m)^{th}$ DRX cycle and/or a start time at which the on-duration timer is started in the $(i+m)^{th}$ DRX cycle.

For an $(i+1)^{th}$ DRX cycle to an $(i+m-1)^{th}$ DRX cycle, the network device is also configured to determine, based on the C-DRX parameter, a start time of the DRX cycle and/or a start time at which the on-duration timer is started in the DRX cycle.

For an $(i+m+1)^{th}$ DRX cycle to an $(i+2*m-1)^{th}$ DRX cycle, the network device determines, based on the C-DRX parameter, the first parameter m, and the second parameter T, a start time of the DRX cycle and/or a start time at which the on-duration timer is started in the DRX cycle. By analogy, the network device determines, based on the C-DRX parameter, the first parameter m, and the second parameter T, a start time of an $(i+n*m)^{th}$ DRX cycle to an $(i+(n+1)*m-1)^{th}$ DRX cycle and/or a start time at which the on-duration timer is started.

It should be understood that the start time of the DRX cycle may be the same as or different from the start time of the on-duration timer in the DRX cycle.

Correspondingly, the terminal device determines, based on the obtained C-DRX parameter, a start time of an $i^{th}$ DRX cycle and/or a start time at which the on-duration timer is started in the $i^{th}$ DRX cycle, where i is a positive integer. The terminal device determines a first parameter m and a second parameter T. For example, the first parameter m and the second parameter T may be determined and sent by the network device to the terminal device. Specifically, the network device may send second configuration information to the terminal device, where the second configuration information includes the first parameter m and the second parameter T. The terminal device may receive the second configuration information from the network device. The first parameter m and the second parameter T may be carried in same configuration information, or may be carried in different configuration information. It should be understood that the second configuration information and the first configuration information may be carried in same configuration information, or may be carried in different configuration information. The first parameter m and the second parameter T may also be predefined. The terminal device determines, based on the C-DRX parameter, the first parameter m, and the second parameter T, a start time of an (i+m)th DRX cycle and/or a start time at which the on-duration timer is started in the (i+m)th DRX cycle.

For an (i+1)th DRX cycle to an (i+m-1)th DRX cycle, the terminal device also determines, based on the C-DRX parameter, a start time of the DRX cycle and/or a start time at which the on-duration timer is started in the DRX cycle. It should be understood that the terminal device does not adjust the start time of the DRX cycle and the start time of the on-duration timer in the DRX cycle.

For an (i+m+1)th DRX cycle to an (i+2*m-1)th DRX cycle, the terminal device determines, based on the C-DRX parameter, the first parameter m, and the second parameter T, a start time of the DRX cycle and/or a start time at which the on-duration timer is started in the DRX cycle. The (i+m)th DRX cycle to the (i+2*m-1)th DRX cycle are considered as one adjustment. By analogy, the terminal device determines, based on the C-DRX parameter, the first parameter m, and the second parameter T, a start time of an (i+n*m)th DRX cycle to an (i+(n+1)*m-1)th DRX cycle and/or a start time at which the on-duration timer is started. The (i+n*m)th DRX cycle to the (i+(n+1)*m-1)th DRX cycle are considered as one adjustment.

Optionally, the first parameter m is related to a size of the DRX cycle and a size of a data transmission period. For example, the first parameter m may be determined based on a size of the DRX cycle and a size of a transmission period of XR/CG service data. For example, assuming that a difference obtained by subtracting the size of the DRX cycle from the transmission period of the XR/CG service data is delta, the first parameter m may be determined based on delta. For example, the first parameter m meets that m*delta is closest to onDurationTimer and is less than or equal to onDurationTimer, (m+1)*delta is closest to onDurationTimer and is less than or equal to onDurationTimer, or (m-1)*delta is closest to onDurationTimer and is less than or equal to onDurationTimer.

Optionally, the second parameter T may be related to a quantity of times of DRX cycle adjustment. For example, T may be equal to n*offset1, where n is a quantity of times of DRX cycle adjustment starting from the ith DRX cycle, and offset 1 may be an offset value configured by the network device or predefined. For example, offset1 is a difference obtained by subtracting the size of the DRX cycle from the transmission period of the XR/CG service data. The second parameter T may be related to a size of the DRX cycle and a size of a data transmission period. For example, the second parameter T may be determined based on a size of the DRX cycle and a size of a transmission period of XR/CG service data. For example, T is a difference obtained by subtracting the size of the DRX cycle from the transmission period of the XR/CG service data. The second parameter T may further be related to the quantity of times of DRX cycle adjustment, the size of the DRX cycle, and the size of the data transmission period.

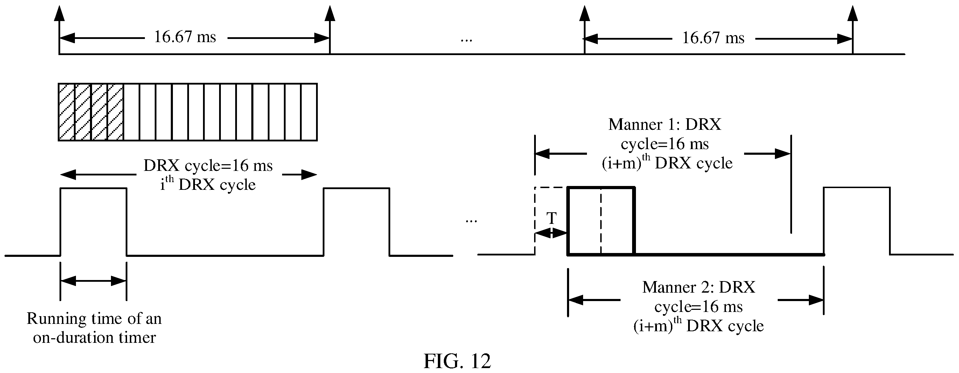

FIG. 12 is a schematic diagram of adjusting a start time at which an on-duration timer is started in an (i+m)th DRX cycle. When the start time at which the on-duration timer is started in the (i+m)th DRX cycle is adjusted, there are two manners about a start time of the (i+m)th DRX cycle. One is Manner 1 in FIG. 12. The start time of the (i+m)th DRX cycle is the same as an original start time of the (i+m)th DRX cycle, that is, the start time of the (i+m)th DRX cycle is not adjusted, and is determined based on the existing C-DRX parameter and is irrelevant to the first parameter m and the second parameter T. The other is Manner 2 in FIG. 12. The start time of the (i+m)th DRX cycle is the same as the start time at which the on-duration timer is started in the (i+m)th DRX cycle. It may be understood that both the start time at which the on-duration timer is started in the (i+m)th DRX cycle and the start time of the (i+m)th DRX cycle are adjusted. It should be understood that the start time at which the on-duration timer is started may be a start subframe or a start timeslot.

Optionally, the adjusted start time at which the on-duration timer is started in the (i+m)th DRX cycle is in an original running time period of the on-duration timer in the (i+m)th DRX cycle. The original start time of the DRX cycle and the running time of the on-duration timer are determined based on the existing C-DRX parameter. As shown in FIG. 12, the adjusted start time at which the on-duration timer is started in the (i+m)th DRX cycle does not exceed a time range corresponding to a dashed line, and the time range corresponding to the dashed line is a running time that is of the on-duration timer in the (i+m)th DRX cycle and that is determined based on the existing C-DRX parameter.

In another implementation, the network device determines first indication information, where the first indication information may indicate a start time at which the on-duration timer is started in a next DRX cycle and/or an offset value of the start time at which the on-duration timer is started in the next DRX cycle. The network device sends at least one piece of control information and/or at least one piece of data to a terminal device in an active time of the DRX cycle, where the control information and/or the data include/includes the first indication information. The offset value of the start time may be an offset value other than drx-StartOffset and drx-SlotOffset, or an offset of the parameter drx-StartOffset or an offset of the parameter drx-SlotOffset.

Optionally, the first indication information may also indicate a start time of the next DRX cycle and/or an offset value of the start time of the next DRX cycle.

Specifically, at least one of the following information may include the first indication information: first control information, second control information, third control information, a MAC CE carried on a PDSCH scheduled by using the first control information, a MAC CE carried on a PDSCH scheduled by using the second control information, and a MAC CE carried on a PDSCH scheduled by using the third control information.

Correspondingly, the terminal device obtains the first indication information. Specifically, the terminal device monitors at least one PDCCH and/or receives data on at least one PDSCH in an active time of the DRX cycle, where control information carried on the at least one PDCCH and/or the data include/includes the first indication information. The terminal device determines, based on the received first indication information, the start time at which the on-duration timer is started in the next DRX cycle or the start time of the next DRX cycle. The at least one PDCCH includes the first PDCCH, the second PDCCH, or the third PDCCH. The at least one PDSCH includes the PDSCH scheduled by using the first control information, the PDSCH scheduled by using the second control information, or the PDSCH scheduled by using the third control information. That the first indication information is included in the data of the PDSCH may mean that the MAC CE including the first indication information is carried on the PDSCH.

Specifically, the terminal device determines, based on the C-DRX parameter and the offset value that is of the start time and that is indicated by the first indication information, the start time at which the on-duration timer is started in the next DRX cycle. Alternatively, the terminal device may determine the adjusted start time of the next DRX cycle based on the C-DRX parameter and the offset value that is of the start time and that is indicated by the first indication information. Assuming that the offset value that is of the start time and that is indicated by the first indication information is offset2, the on-duration timer of the next DRX may be started after a subframe offset drx-SlotOffset determined according to the formula (4):

$$[(SFN \times 10)+\text{subframe number}] \text{ modulo } (\text{drx-LongCycle})=\text{drx-StartOffset}+\text{offset2} \quad (4)$$

Alternatively, the on-duration timer of the next DRX is started after a subframe offset drx-SlotOffset+offset2 determined according to the formula (1).

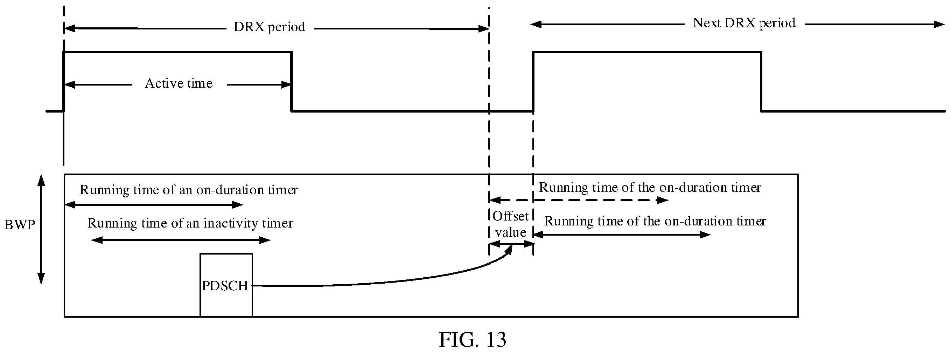

FIG. 13 is a schematic diagram of adjusting a start time at which an on-duration timer is started in a next DRX cycle. In FIG. 13, a running time of the on-duration timer corresponding to a dashed-line double-arrow is a running time of the on-duration timer in the next DRX cycle when an offset value that is of a start time and that is indicated by first indication information is not introduced, and a running time of the on-duration timer corresponding to a solid-line double-arrow is a running time of the on-duration timer in the next DRX cycle, where the running time is adjusted based on the offset value that is of the start time and that is indicated by the first indication information. The offset value of the start time at which the on-duration timer is started may be indicated by the first indication information sent by the network device by using the PDSCH in an active time of a previous DRX cycle.

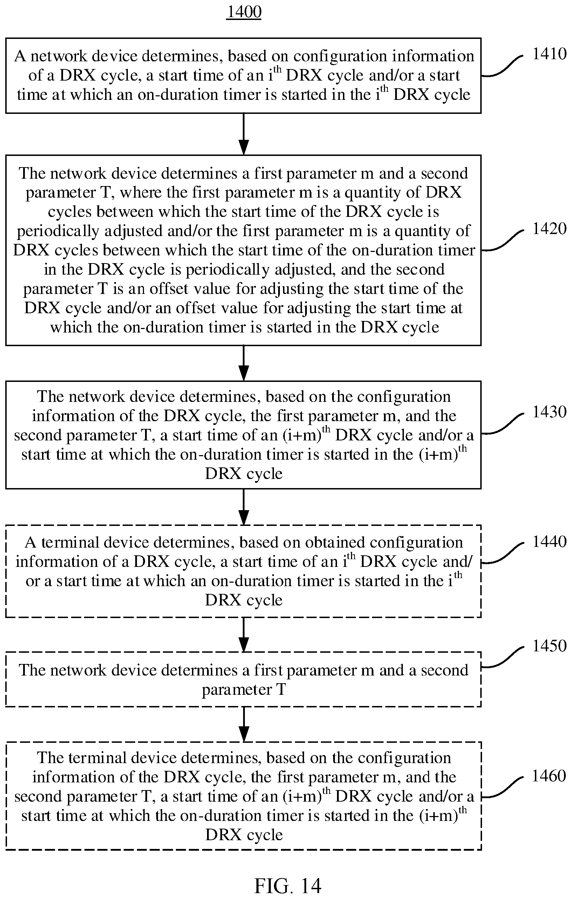

FIG. 14 is a schematic interaction flowchart of another information monitoring method 1400 according to an embodiment of this application. In this embodiment, a terminal device and a network device may automatically adjust a start time of a DRX cycle and/or a start time of an on-duration timer in the DRX cycle every m DRX cycles, so that an arrival time of data that needs to be transmitted can be prevented from falling within a non-active time of DRX, and a data transmission delay can be reduced.

1410: The network device may determine, based on a C-DRX parameter, a start time of an $i^{th}$ DRX cycle and/or a start time at which an on-duration timer is started in the $i^{th}$ DRX cycle, where i is a positive integer.

The C-DRX parameter is configured by the network device. For example, the C-DRX parameter may include a plurality of drx-StartOffsets, or a plurality of patterns may be determined according to the formula (4). The network device determines, based on one drx-StartOffset or one pattern, the start time of the $i^{th}$ DRX cycle and/or the start time at which the on-duration timer is started in the $i^{th}$ DRX cycle.

It should be understood that a start time of a DRX cycle may be the same as or different from a start time of the on-duration timer in the DRX cycle.

1420: The network device determines a first parameter m and a second parameter T.

The first parameter m is a quantity of DRX cycles between which the start time of the DRX cycle is periodically adjusted and/or the first parameter m is a quantity of DRX cycles between which the start time of the on-duration timer in the DRX cycle is periodically adjusted, and m is a positive integer. The second parameter T is an offset value for adjusting the start time of the DRX cycle and/or an offset value for adjusting the start time at which the on-duration timer is started in the DRX cycle.

Optionally, the first parameter m is related to a size of the DRX cycle and a size of a data transmission period. For example, the first parameter m may be determined based on a size of the DRX cycle and a size of a transmission period of XR/CG service data. For example, assuming that a difference obtained by subtracting the size of the DRX cycle from the transmission period of the XR/CG service data is delta, the first parameter m is determined based on delta. For example, the first parameter m meets that m*delta is closest to onDurationTimer and is less than or equal to onDurationTimer, (m+1)*delta is closest to onDurationTimer and is less than or equal to onDurationTimer, or (m-1)*delta is closest to onDurationTimer and is less than or equal to onDurationTimer.

For example, the second parameter T may be related to a quantity of times of DRX cycle adjustment. For example, T may be equal to n*offset1, where n is a quantity of times of DRX cycle adjustment, and offset1 may be an offset value configured by the network device or predefined. For example, offset1 is a difference obtained by subtracting the size of the DRX cycle from the transmission period of the XR/CG service data. The second parameter T may be related to a size of the DRX cycle and a size of a data transmission period. For example, the second parameter T may be determined based on a size of the DRX cycle and a size of a transmission period of the XR/CG service data. For example, T is a difference obtained by subtracting the size of the DRX cycle from the transmission period of the XR/CG service data. The second parameter T may further be related to the quantity of times of DRX cycle adjustment, the size of the DRX cycle, and the size of the data transmission period.

For example, the first parameter m and the second parameter T may be determined by the network device, or may be predefined. When the first parameter m and the second parameter T are determined by the network device, the network device sends second configuration information to the terminal device, where the second configuration information includes the first parameter m and the second parameter T. It should be understood that the second configuration information and the first configuration information may be carried in same configuration information, or may be carried in different configuration information. In other words, the first configuration information and the second configuration information may be same configuration information.

1430: The network device determines, based on the C-DRX parameter, the first parameter m, and the second parameter T, a start time of an $(i+m)^{th}$ DRX cycle and/or a start time at which the on-duration timer is started in the $(i+m)^{th}$ DRX cycle.

For an $(i+1)^{th}$ DRX cycle to an $(i+m-1)^{th}$ DRX cycle, the network device is also configured to determine, based on the C-DRX parameter, a start time of the DRX cycle and/or a start time at which the on-duration timer is started in the DRX cycle.

For an $(i+m+1)^{th}$ DRX cycle to an $(i+2*m-1)^{th}$ DRX cycle, the network device determines, based on the C-DRX parameter, the first parameter m, and the second parameter T, a start time of the DRX cycle and/or a start time at which the on-duration timer is started in the DRX cycle. By analogy, the network device determines, based on the C-DRX parameter, the first parameter m, and the second parameter T, a start time of an $(i+n*m)^{th}$ DRX cycle to an $(i+(n+1)*m-1)^{th}$ DRX cycle and/or a start time at which the on-duration timer is started.

1440: The terminal device determines, based on an obtained C-DRX parameter, a start time of an $i^{th}$ DRX cycle and/or a start time at which an on-duration timer is started in the $i^{th}$ DRX cycle.

1450: The terminal device determines a first parameter m and a second parameter T. For example, the terminal device may receive second configuration information from the network device, and the second configuration information includes the first parameter m and the second parameter T. For example, the first parameter m and the second parameter T may also be predefined.

1460: The terminal device determines, based on the C-DRX parameter, the first parameter m, and the second parameter T, a start time of an $(i+m)^{th}$ DRX cycle and/or a start time at which the on-duration timer is started in the $(i+m)^{th}$ DRX cycle.

For an $(i+1)^{th}$ DRX cycle to an $(i+m-1)^{th}$ DRX cycle, the terminal device also determines, based on the C-DRX parameter, a start time of the DRX cycle and/or a start time at which the on-duration timer is started in the DRX cycle. It should be understood that the terminal device does not adjust the start time of the DRX cycle and the start time of the on-duration timer in the DRX cycle.

For an $(i+m+1)^{th}$ DRX cycle to an $(i+2*m-1)^{th}$ DRX cycle, the terminal device determines, based on the C-DRX parameter, the first parameter m, and the second parameter T, a start time of the DRX cycle and/or a start time at which the on-duration timer is started in the DRX cycle. The $(i+m)^{th}$ DRX cycle to the $(i+2*m-1)^{th}$ DRX cycle are considered as one adjustment. By analogy, the terminal device determines, based on the C-DRX parameter, the first parameter m, and the second parameter T, a start time of an $(i+n*m)^{th}$ DRX cycle to an $(i+(n+1)*m-1)^{th}$ DRX cycle and/or a start time at which the on-duration timer is started.

It should be understood that 1410 and 1440 may be performed simultaneously, 1420 and 1450 may be performed simultaneously, or 1430 and 1460 may be performed simultaneously.

For example, if the C-DRX parameter includes a plurality of drx-StartOffsets, or a plurality of patterns are determined according to the formula (4), that is, there may be a plurality of start times of a same DRX cycle and/or a plurality of start times of the on-duration timer in a same DRX cycle, the network device may indicate, by using the PDCCH, to update drx-StartOffset in the C-DRX parameter in 1410 and 1440 or indicate to update the pattern, and the network device and the terminal device re-perform the foregoing steps.

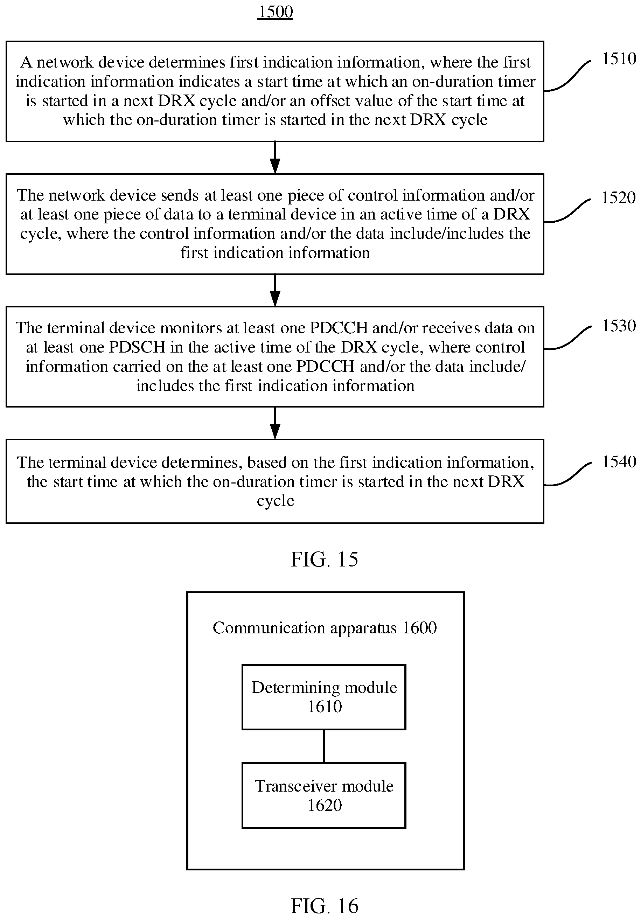

FIG. 15 is a schematic interaction flowchart of another information monitoring method 1500 according to an embodiment of this application. In this embodiment, a network device may determine first indication information, and indicate, by using the first indication information, a terminal device to adjust a start time at which an on-duration timer is started in a next DRX cycle and/or an offset value of the start time at which the on-duration timer is started in the next DRX cycle. The network device predicts an arrival time of a next video frame, to dynamically adjust an active time of the DRX, thereby reducing power consumption of the terminal device.

1510: The network device determines first indication information, where the first indication information indicates a start time at which an on-duration timer is started in a next DRX cycle and/or an offset value of the start time at which the on-duration timer is started in the next DRX cycle.

For example, the first indication information may also indicate a start time of the next DRX cycle and/or an offset value of the start time of the next DRX cycle.

1520: The network device sends at least one piece of control information and/or at least one piece of data to a terminal device in an active time of a DRX cycle, where the control information and/or the data sent by the network device include/includes the first indication information. The control information may be DCI carried on a PDCCH. The data may include a MAC CE, and is carried on a PDSCH.

Specifically, at least one of the following information may include the first indication information: first control information, second control information, third control information, a MAC CE carried on a PDSCH scheduled by using the first control information, a MAC CE carried on a PDSCH scheduled by using the second control information, and a MAC CE carried on a PDSCH scheduled by using the third control information.

1530: The terminal device monitors at least one PDCCH and/or receives data on at least one PDSCH in the active time of the DRX cycle, where control information carried on the at least one PDCCH and/or the data include/includes the first indication information. The at least one PDCCH includes the first PDCCH, the second PDCCH, or the third PDCCH. The at least one PDSCH includes the PDSCH scheduled by using the first control information, the PDSCH scheduled by using the second control information, or the PDSCH scheduled by using the third control information. That the first indication information is included in the data of the PDSCH may mean that the MAC CE is carried on the PDSCH.

1540: The terminal device determines, based on the first indication information, the start time at which the on-duration timer is started in the next DRX cycle. Alternatively, the terminal device may determine the start time of the next DRX cycle based on the first indication information

Specifically, the terminal device determines, based on the C-DRX parameter and the offset value that is of the start time and that is indicated by the first indication information, the start time at which the on-duration timer is started in the next DRX cycle. Alternatively, the terminal device may determine the adjusted start time of the next DRX cycle based on the C-DRX parameter and offset value that is of the start time and that is indicated by the first indication information. Assuming that the offset value that is of the start time and that is indicated by the first indication information is offset2, the on-duration timer of the next DRX may be started after a subframe offset drx-SlotOffset is determined according to the foregoing formula (4); or the on-duration timer of the next DRX may be started after a subframe offset drx-SlotOffset+offset2 is determined according to the foregoing formula (1).

FIG. 16 is a schematic block diagram of a communication apparatus 1600 according to an embodiment of this application. The communication apparatus 1600 may include a determining module 1610 and a transceiver module 1620. Optionally, a storage unit may be further included. The storage unit may be configured to store instructions (code or a program) and/or data. The determining module 1610 and the transceiver module 1620 may be coupled to the storage unit. For example, the determining module 1610 may read the instructions (code or a program) and/or data in the storage unit, to implement a corresponding method. The foregoing units may be independently disposed, or may be partially or completely integrated.

In some possible implementations, the communication apparatus 1600 can correspondingly implement behavior and functions of the terminal device in the foregoing method embodiments, for example, implement the method performed by the terminal device in the embodiment in FIG. 9. The communication apparatus 1600 may be a terminal device, a component (for example, a chip or a circuit) used in the terminal device, a chip or a chip set in the terminal device, or a part that is of the chip and that is configured to perform a related method function.

For example, the determining module 1610 may be configured to determine at least one first physical downlink control channel PDCCH candidate location based on a search space set in a first search space set group SSSG.

The transceiver module 1620 is configured to monitor a first PDCCH at the first PDCCH candidate location during running of an on-duration timer in a discontinuous reception DRX cycle.

The determining module 1610 is further configured to determine at least one second PDCCH candidate location based on a search space set in a second SSSG.

The transceiver module 1620 is further configured to: when monitoring, on the first PDCCH, first control information used to schedule newly transmitted data, monitor a second PDCCH at the second PDCCH candidate location during running of an inactivity timer in the DRX cycle, where a period of the first PDCCH is greater than a period of the second PDCCH and/or duration of the search space set in the first SSSG is less than duration of the search space set in the second SSSG.

For example, the determining module 1610 is further configured to determine at least one third PDCCH candidate location based on the search space set in the second SSSG.

The transceiver module 1620 is further configured to monitor a third PDCCH at the third PDCCH candidate location during running of the on-duration timer in the DRX cycle, where a time for monitoring the first PDCCH is different from a time for monitoring the third PDCCH.

For example, the transceiver module 1620 is further configured to receive first configuration information from a network device, where the first configuration information includes at least one of the following: a start time for monitoring the first PDCCH, a time length for monitoring the first PDCCH, a start time for monitoring the third PDCCH, or a time length for monitoring the third PDCCH.

For example, the start time for monitoring the first PDCCH is the same as a start time at which the on-duration timer is started in the DRX cycle.

For example, when the transceiver module 1620 monitors the first PDCCH at the first PDCCH candidate location, a first scheduling offset value is greater than or equal to a first threshold, where the first scheduling offset value is a time offset value between the first PDCCH and a physical downlink shared channel PDSCH or a physical uplink shared channel PUSCH scheduled by the first PDCCH.

When the transceiver module monitors the second PDCCH at the second PDCCH candidate location, a second scheduling offset value is greater than or equal to a second threshold, where the second scheduling offset value is a time offset value between the second PDCCH and a PDSCH or a PUSCH scheduled by the second PDCCH, and the first threshold is greater than the second threshold.

When the transceiver module monitors the third PDCCH at the third PDCCH candidate location, a third scheduling offset value is greater than or equal to the second threshold, where the third scheduling offset value is a time offset value between the third PDCCH and a PDSCH or a PUSCH scheduled by the third PDCCH.

For example, the determining module 1610 is further configured to:

determine, based on obtained DRX configuration information, a start time of an $i^{th}$ DRX cycle and/or a start time at which the on-duration timer is started in the $i^{th}$ DRX cycle, where i is a positive integer;

determine a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and

determine, based on the DRX configuration information, the first parameter m, and the second parameter T, a start time of an $(i+m)^{th}$ DRX cycle and/or a start time at which the on-duration timer is started in the $(i+m)^{th}$ DRX cycle.

For example, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

For example, the transceiver module 1620 is further configured to obtain first indication information, where the first indication information indicates a start time at which the on-duration timer is started in a next DRX cycle and/or an offset value of the start time at which the on-duration timer is started in the next DRX cycle.

The determining module 1610 is further configured to determine, based on the first indication information, the start time at which the on-duration timer is started in the next DRX cycle.

For example, the determining module 1610 is specifically configured to determine, based on the DRX configuration information and the offset value of the start time at which the on-duration timer is started, the start time at which the on-duration timer is started in the next DRX cycle.

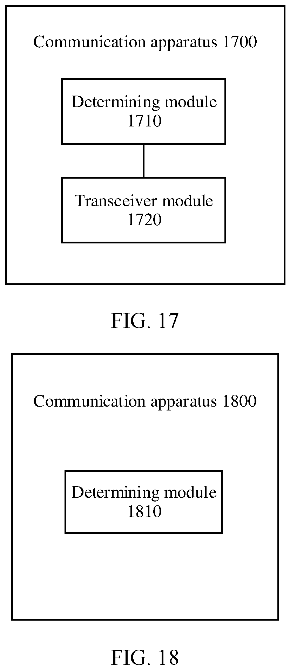

FIG. 17 is a schematic block diagram of a communication apparatus 1700 according to an embodiment of this application. The communication apparatus 1700 may include a determining module 1710 and a transceiver module 1720. Optionally, a storage unit may be further included. The storage unit may be configured to store instructions (code or a program) and/or data. The determining module 1710 and the transceiver module 1720 may be coupled to the storage unit. For example, the determining module 1710 may read the instructions (code or a program) and/or data in the storage unit, to implement a corresponding method. The foregoing units may be independently disposed, or may be partially or completely integrated.

In some possible implementations, the communication apparatus 1700 can correspondingly implement behavior and functions of the network device in the foregoing method embodiments, for example, implement the method performed by the network device in the embodiment in FIG. 9. The communication apparatus 1700 may be a network device, a component (for example, a chip or a circuit) used in the network device, a chip or a chip set in the network device, or a part that is of the chip and that is configured to perform a related method function.

For example, the determining module 1710 is configured to determine at least one first physical downlink control channel PDCCH candidate location based on a search space set in a first search space set group SSSG.

The transceiver module 1720 is configured to send at least one piece of first control information to a terminal device at the first PDCCH candidate location during running of an on-duration timer in a discontinuous reception DRX cycle.

The determining module 1710 is further configured to determine at least one second PDCCH candidate location based on a search space set in a second SSSG.

The transceiver module 1720 is further configured to: the first control information is used to schedule newly transmitted data, and during running of an inactivity timer in the DRX cycle, send at least one piece of second control information to the terminal device at the second PDCCH candidate location, where a period of the first PDCCH is greater than a period of the second PDCCH and/or duration of the search space set in the first SSSG is less than duration of the search space set in the second SSSG.

For example, the determining module 1710 is further configured to determine at least one third PDCCH candidate location based on the search space set in the second SSSG.

The transceiver module 1720 is further configured to send at least one piece of third control information to the terminal device at the third PDCCH candidate location during running of the on-duration timer in the DRX cycle, where a time at which the first control information is sent is different from a time at which the third control information is sent.

For example, the transceiver module 1720 is further configured to send first configuration information to the terminal device, where the first configuration information includes at least one of the following: a start time for monitoring the first PDCCH, a time length for monitoring the first PDCCH, a start time for monitoring the third PDCCH, or a time length for monitoring the third PDCCH.

For example, the determining module 1710 is further configured to:

determine, based on DRX configuration information, a start time of an $i^{th}$ DRX cycle and/or a start time at which the on-duration timer is started in the $i^{th}$ DRX cycle, where i is a positive integer;
determine a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and
determine, based on the DRX configuration information, the first parameter m, and the second parameter T, a start time of an $(i+m)^{th}$ DRX cycle and/or a start time at which the on-duration timer is started in the $(i+m)^{th}$ DRX cycle.

For example, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

For example, the determining module 1710 is further configured to determine first indication information, where the first indication information indicates a start time at which the on-duration timer is started in a next DRX cycle and/or an offset value of the start time at which the on-duration timer is started in the next DRX cycle.

The transceiver module 1720 is further configured to send the first indication information to the terminal device in an active time of the DRX cycle.

FIG. 18 is a schematic block diagram of a communication apparatus 1800 according to an embodiment of this application. The communication apparatus 1800 may include a determining module 1810. Optionally, a storage unit may be further included. The storage unit may be configured to store instructions (code or a program) and/or data. The determining module 1810 may be coupled to the storage unit. For example, the determining module 1810 may read the instructions (code or a program) and/or data in the storage unit, to implement a corresponding method. The foregoing units may be independently disposed, or may be partially or completely integrated.

In some possible implementations, the communication apparatus 1800 can correspondingly implement behavior and functions of the terminal device in the foregoing method embodiments, for example, implement the method performed by the terminal device in the embodiment in FIG. 14. The communication apparatus 1800 may be a terminal device, a component (for example, a chip or a circuit) used in the terminal device, a chip or a chip set in the terminal device, or a part that is of the chip and that is configured to perform a related method function.

For example, the determining module 1810 may be configured to:

determine, based on obtained DRX configuration information, a start time of an $i^{th}$ discontinuous reception DRX cycle and/or a start time at which an on-duration timer is started in the $i^{th}$ DRX cycle, where i is a positive integer;
determine a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and
determine, based on the DRX configuration information, the first parameter m, and the second parameter T, a start time of an $(i+m)^{th}$ DRX cycle and/or a start time at which the on-duration timer is started in the $(i+m)^{th}$ DRX cycle.

For example, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

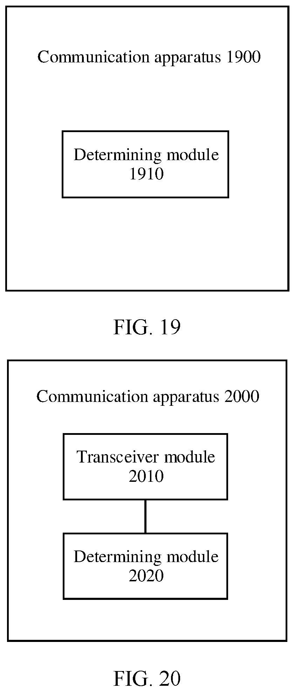

FIG. 19 is a schematic block diagram of a communication apparatus 1900 according to an embodiment of this application. The communication apparatus 1900 includes a determining module 1910. Optionally, a storage unit may be further included. The storage unit may be configured to store instructions (code or a program) and/or data. The determining module 1910 may be coupled to the storage unit. For example, the determining module 1910 may read the instructions (code or a program) and/or data in the storage unit, to implement a corresponding method. The foregoing units may be independently disposed, or may be partially or completely integrated.

In some possible implementations, the communication apparatus 1900 can correspondingly implement behavior and functions of the network device in the foregoing method embodiments, for example, implement the method performed by the network device in the embodiment in FIG. 14. The communication apparatus 1900 may be a network device, a component (for example, a chip or a circuit) used in the network device, a chip or a chip set in the network device, or a part that is of the chip and that is configured to perform a related method function.

For example, the determining module 1910 may be configured to determine, based on DRX configuration information, a start time of an $i^{th}$ DRX cycle and/or a start time at which the on-duration timer is started in the $i^{th}$ DRX cycle, where i is a positive integer;

determine a first parameter m and a second parameter T, where the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and determine, based on the DRX configuration information, the first parameter m, and the second parameter T, a start time of an $(i+m)^{th}$ DRX cycle and/or a start time at which the on-duration timer is started in the $(i+m)^{th}$ DRX cycle.

For example, the first parameter m is related to a size of the DRX cycle and a size of a data transmission period. The second parameter T is related to the size of the DRX cycle and the size of the data transmission period, and/or the second parameter T is related to a quantity of times of DRX cycle adjustment.

FIG. 20 is a schematic block diagram of a communication apparatus 2000 according to an embodiment of this application. The communication apparatus 2000 includes a transceiver module 2010 and a determining module 2020. Optionally, a storage unit may be further included. The storage unit may be configured to store instructions (code or a program) and/or data. The transceiver module 2010 and the determining module 2020 may be coupled to the storage unit. For example, the determining module 2020 may read the instructions (code or a program) and/or data in the storage unit, to implement a corresponding method. The foregoing units may be independently disposed, or may be partially or completely integrated.

In some possible implementations, the communication apparatus 2000 can correspondingly implement behavior and functions of the terminal device in the foregoing method embodiments, for example, implement the method performed by the terminal device in the embodiment in FIG. 15. The communication apparatus 2000 may be a terminal device, a component (for example, a chip or a circuit) used in the terminal device, a chip or a chip set in the terminal device, or a part that is of the chip and that is configured to perform a related method function.

For example, the transceiver module 2010 may be configured to monitor at least one physical downlink control channel PDCCH and/or receive data on at least one physical downlink shared channel PDSCH in an active time of a discontinuous reception DRX cycle, where control information carried on the at least one PDCCH and/or the data include/includes first indication information, and the first indication information indicates a start time at which the on-duration timer is started in a next DRX cycle and/or an offset value of the start time at which the on-duration timer is started in the next DRX cycle.

The determining module 2020 is configured to determine, based on the first indication information, the start time at which the on-duration timer is started in the next DRX cycle.

For example, the determining module 2020 is specifically configured to determine, based on the DRX configuration information and the offset value of the start time at which the on-duration timer is started, the start time at which the on-duration timer is started in the next DRX cycle.

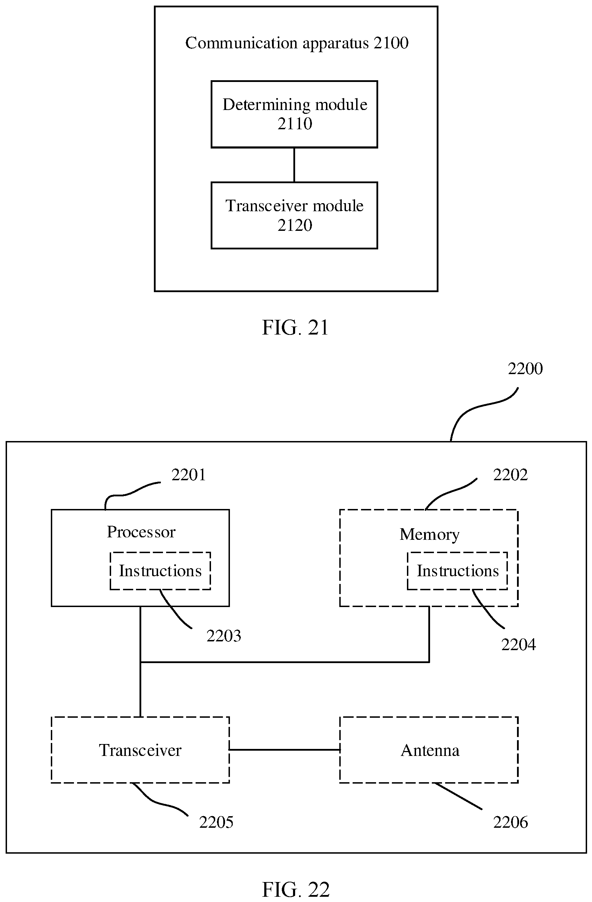

FIG. 21 is a schematic block diagram of a communication apparatus 2100 according to an embodiment of this application. The communication apparatus 2100 includes a determining module 2110 and a transceiver module 2120. Optionally, a storage unit may be further included. The storage unit may be configured to store instructions (code or a program) and/or data. The determining module 2110 and the transceiver module 2120 may be coupled to the storage unit. For example, the determining module 2110 may read the instructions (code or a program) and/or data in the storage unit, to implement a corresponding method. The foregoing units may be independently disposed, or may be partially or completely integrated.

In some possible implementations, the communication apparatus 2100 can correspondingly implement behavior and functions of the network device in the foregoing method embodiments, for example, implement the method performed by the network device in the embodiment in FIG. 15. The communication apparatus 2100 may be a network device, a component (for example, a chip or a circuit) used in the network device, a chip or a chip set in the network device, or a part that is of the chip and that is configured to perform a related method function.

The determining module 2110 may be configured to determine first indication information, where the first indication information indicates a start time at which an on-duration timer is started in a next discontinuous reception DRX cycle and/or an offset value of the start time at which the on-duration timer is started in the next DRX cycle.

The transceiver module 2120 is configured to send at least one piece of control information and/or at least one piece of data to a terminal device in an active time of the DRX cycle, where the control information and/or the data include/includes the first indication information.

FIG. 22 is a schematic block diagram of a communication apparatus 2200 according to an embodiment of this application. The communication apparatus 2200 may be a terminal device, and can implement functions of the terminal device in the method provided in embodiments of this application. Alternatively, the communication apparatus 2200 may be a network device, and can implement functions of the network device in the method provided in embodiments of this application. Alternatively, the communication apparatus 2200 may be an apparatus that can support the terminal device to implement a corresponding function in the method provided in embodiments of this application, or an apparatus that can support the network device to implement a corresponding function in the method provided in embodiments of this application. The communication apparatus 2200 may alternatively be a chip system. In embodiments of this application, the chip system may include a chip, or may include a chip and another discrete component. For specific functions, refer to the descriptions in the foregoing method embodiment.

The communication apparatus 2200 includes one or more processors 2201, configured to implement or support the communication apparatus 2200 to implement the functions of the network device (base station) or the terminal device in the method provided in embodiments of this application. For details, refer to detailed descriptions in the method example. Details are not described herein again. The processor 2201 may also be referred to as a processing unit or a determining module, and may implement a specific control function. The processor 2201 may be a general-purpose processor, a dedicated processor, or the like. For example, the processor 2201 includes a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 2200, execute a software program, and/or process data. Different processors may be independent components, or may be integrated into one or more processors, for example, integrated into one or more application-specific integrated circuits.

Optionally, the communication apparatus 2200 includes one or more memories 2202 to store instructions 2204. The instructions may be run on the processor 2201, to enable the communication apparatus 2200 to perform the method described in the foregoing method embodiment. The memory 2202 is coupled to the processor 2201. The coupling in embodiments of this application may be an indirect coupling or a communication connection between apparatuses, units, or modules in an electrical form, a mechanical form, or another form, and is used for information exchange between the apparatuses, the units, or the modules. The processor 2201 may operate in collaboration with the memory 2202. At least one of the at least one memory may be included in the processor. It should be noted that the memory 2202 is not mandatory, and therefore is shown by using a dashed line in FIG. 22.

Optionally, the memory 2202 may further store data. The processor and the memory may be separately disposed, or may be integrated together. In embodiments of this application, the memory 2202 may be a nonvolatile memory, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 2200 may include instructions 2203 (which sometimes may also be referred to as code or a program), and the instructions 2203 may be run on the processor, to enable the communication apparatus 2200 to perform the method described in the foregoing embodiment. The processor 2201 may store data.

Optionally, the communication apparatus 2200 may further include a transceiver 2205 and an antenna 2206. The transceiver 2205 may be referred to as a transceiver unit, a transceiver module, a transceiver, a transceiver circuit, a transceiver, an input/output interface, and the like, and is configured to implement a transceiver function of the communication apparatus 2200 by using the antenna 2206.

The processor 2201 and the transceiver 2205 described in this application may be implemented in an integrated circuit (integrated circuit, IC), an analog IC, a radio frequency integrated circuit (radio frequency identification, RFID), a mixed-signal IC, an ASIC, or a printed circuit board (printed circuit board, PCB), an electronic device, and the like. The communication apparatus described in this specification may be implemented by an independent device (for example, an independent integrated circuit or a mobile phone), or may be a part of a larger device (for example, a module that can be embedded into another device). For details, refer to the foregoing descriptions of the terminal device and the network device. Details are not described herein again.

Optionally, the communication apparatus 2200 may further include one or more of the following components: a wireless communication module, an audio module, an external memory interface, an internal memory, a universal serial bus (universal serial bus, USB) port, a power management module, an antenna, a speaker, a microphone, an input/output module, a sensor module, a motor, a camera, a display, or the like. It may be understood that, in some embodiments, the communication apparatus 2200 may include more or fewer components, or some components are integrated, or some components are split. These components may be implemented by hardware, software, or a combination of software and hardware.

It should be noted that the communication apparatus in the foregoing embodiment may be a terminal device (or a network device), or may be a circuit, or may be a chip applied to the terminal device (or the network device), or another combined component or component that has the foregoing terminal function (or the network device), or the like. When the communication apparatus is a terminal device (or a network device), the transceiver module may be a transceiver and may include an antenna, a radio frequency circuit, and the like, and the processing module may be a processor, for example, a central processing unit (central processing unit, CPU). When the communication apparatus is a component having a function of the terminal device (or the network device), the transceiver module may be a radio frequency unit, and the processing module may be a processor. When the communication apparatus is a chip system, the communication apparatus may be a field programmable gate array (field programmable gate array, FPGA), an application-specific integrated circuit (application-specific integrated circuit, ASIC), a system on chip (system on chip, SoC), a CPU, a network processor (network processor, NP), a digital signal processor (digital signal processor, DSP), a micro controller unit (micro controller unit, MCU), a programmable logic device (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another component) and transmit the code instructions to the processor. The processor may be configured to run the code instructions to perform the method in the foregoing method embodiments. For another example, the interface circuit may alternatively be a signal transmission interface circuit between a communication processor and a transceiver.

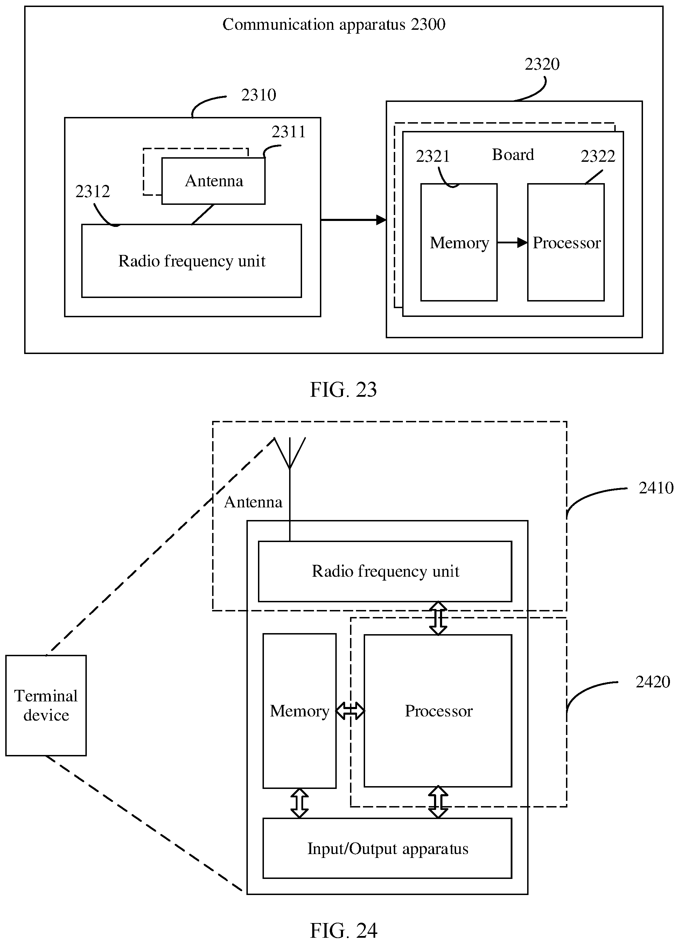

FIG. 23 is a schematic diagram of a simplified structure of a communication apparatus. For ease of understanding and illustration, an example in which the communication apparatus is a base station is used in FIG. 23. The base station may perform a function of the network device in the foregoing method embodiment.

The communication apparatus 2300 may include a processor 2322. The communication apparatus 2300 may further include a transceiver 2310 and a memory 2321. The processor 2322 is configured to support the communication apparatus 2300 in performing a corresponding function in the foregoing method, and the transceiver 2310 may be used by the communication apparatus to perform communication. The memory 2321 is coupled to the processor 2322, and may be configured to store a program and data that are necessary for the communication apparatus 2300 to implement various functions.

Specifically, the transceiver 2310 may be a wireless transceiver, and may be configured to support the communication apparatus 2300 in receiving and sending signaling and/or data through a radio air interface. The transceiver 2310 may also be referred to as a transceiver unit or a communication unit. The transceiver 2310 may include one or more radio frequency units 2312 and one or more antennas 2311. The radio frequency unit, for example, a remote radio unit (remote radio unit, RRU) or an active antenna unit (active antenna unit, AAU), may be specifically configured to: transmit a radio frequency signal, and perform conversion between the radio frequency signal and a baseband signal. The one or more antennas may be specifically configured to radiate and receive the radio frequency signal. Optionally, the transceiver 2310 may include only the radio frequency unit. In this case, the communication apparatus 2300 may include the transceiver 2310, the memory 2321, the processor 2322, and the antenna 2311.

The memory 2321 and the processor 2322 may be integrated, or may be independent of each other. As shown in FIG. 23, the memory 2321 and the processor 2322 may be integrated into a control unit 2320 of the communication apparatus 2300. For example, the control unit 2320 may include a baseband unit (baseband unit, BBU) of an LTE base station, and the baseband unit may also be referred to as a digital unit (digital unit, DU); or the control unit 2320 may include a DU and/or a CU in a base station in 5G or a future radio access technology. The control unit 2320 may include one or more antenna panels. A plurality of antenna panels may jointly support a radio access network (for example, an LTE network) of a single access standard, or a plurality of antenna panels may separately support radio access networks (for example, an LTE network, a 5G network, and another network) of different access standards. The memory 2321 and the processor 2322 may serve one or more antenna panels. In other words, the memory 2321 and the processor 2322 may be separately disposed on each antenna panel. Alternatively, a plurality of antenna panels may share a same memory 2321 and a same processor 2322. In addition, a necessary circuit may be disposed on each antenna panel. For example, the circuit may be configured to implement coupling between the memory 2321 and the processor 2322. The transceiver 2310, the processor 2322, and the memory 2321 may be connected by using a bus (bus) structure and/or another connection medium.

Based on the structure shown in FIG. 23, when the communication apparatus 2300 needs to send data, the processor 2322 may perform baseband processing on the to-be-sent data and output a baseband signal to the radio frequency unit, and the radio frequency unit performs radio frequency processing on the baseband signal and sends a radio frequency signal in a form of an electromagnetic wave through the antenna. When data is sent to the communication apparatus 2300, the radio frequency unit receives the radio frequency signal by using the antenna, converts the radio frequency signal into the baseband signal, and outputs the baseband signal to the processor 2322. The processor 2322 converts the baseband signal into data, and processes the data.

Based on the structure shown in FIG. 23, the transceiver 2310 may be configured to perform the steps performed by the transceiver 2205, and/or the processor 2322 may be configured to invoke instructions in the memory 2321, to perform the steps performed by the processor 2201.

FIG. 24 is a schematic diagram of a simplified structure of a terminal device. For ease of understanding and illustration, an example in which the terminal device is a mobile phone is used in FIG. 24. As shown in FIG. 24, the terminal device includes a processor, a memory, a radio frequency circuit, an antenna, and an input/output apparatus. The processor is mainly configured to process a communication protocol and communication data, control an on-board unit, execute a software program, process data of the software program, and so on. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. It should be noted that some types of devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the device, the radio frequency circuit receives a radio frequency signal by using the antenna, converts the radio frequency signal into a baseband signal, and outputs the baseband signal to the processor. The processor converts the baseband signal into data, and processes the data. For ease of description, only one memory and one processor are shown in FIG. 24. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the apparatus, and the processor having a processing function may be considered as a processing unit of the apparatus. As shown in FIG. 24, the apparatus includes a transceiver unit 2410 and a processing unit 2420. The transceiver unit 2410 may also be referred to as a transceiver, a transceiver machine, a transceiver apparatus, or the like. The processing unit 2420 may also be referred to as a processor, a processing board, a processing module, a processing apparatus, or the like. Optionally, a component for implementing a receiving function in the transceiver unit 2410 may be considered as a receiving unit, and a component for implementing a sending function in the transceiver unit 2410 may be considered as a sending unit. In other words, the transceiver unit 2410 includes the receiving unit and the sending unit. The transceiver unit 2410 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 2410 is configured to perform a sending operation and a receiving operation of the terminal device in the foregoing method embodiments, and the processing unit 2420 is configured to perform an operation other than the receiving and sending operations on the terminal device in the foregoing method embodiments. For example, in an implementation, the transceiver unit 2410 may be configured to perform a sending step, a receiving step, and/or another process configured to support the technology described in this specification in the embodiment shown in FIG. 9, FIG. 14, or FIG. 15. The processing unit 2420 may be configured to perform steps other than the receiving step or the sending step in the embodiment shown in FIG. 9, FIG. 14, or FIG. 15, and/or another process configured to support the technology described in this specification.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a plurality of terminal devices, or may include more network devices and more terminal devices. For example, the communication system includes a network device and a terminal device that are configured to implement related functions in FIG. 9, FIG. 14, or FIG. 15, for example, a terminal device. The network device is separately configured to implement functions of the network part related to FIG. 9, FIG. 14, or FIG. 15. The terminal device is configured to implement a function of the terminal device related to FIG. 9, FIG. 14, or FIG. 15, for example, a function of the terminal device. For details, refer to the related descriptions in the method embodiments. Details are not described herein again.

An embodiment of this application further provides a computer-readable storage medium including instructions. When the instructions are run on a computer, the computer is enabled to perform the method performed by the network device in FIG. 9, FIG. 14, or FIG. 15; or when the instructions are run on a computer, the computer is enabled to perform the method performed by the terminal device in FIG. 9, FIG. 14, or FIG. 15.

An embodiment of this application further provides a computer program product including instructions. When the instructions are run on a computer, the computer is enabled to perform the method performed by the network device in FIG. 9, FIG. 14, or FIG. 15; or when the instructions are run on a computer, the computer is enabled to perform the method performed by the terminal device in FIG. 9, FIG. 14, or FIG. 15.

An embodiment of this application provides a chip system. The chip system includes a processor, may further include a memory, and is configured to implement the function of the network device or the terminal device in the foregoing method. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory (read-only memory, ROM), a RAM, a magnetic disk, or an optical disc.

Obviously, a person skilled in the art may make various modifications and variations to this application. This application is intended to cover these modifications and variations of this application provided that they fall within the scope of protection defined by the following claims and their equivalent technologies.

**Claims**

1. An information monitoring method, comprising:

   determining, by a terminal device, at least one first physical downlink control channel PDCCH candidate location based on a search space set in a first search space set group SSSG;

   monitoring, by the terminal device, a first PDCCH at the first PDCCH candidate location during running of an on-duration timer in a discontinuous reception DRX cycle;

   determining, by the terminal device, at least one second PDCCH candidate location based on a search space set in a second SSSG; and

   when monitoring, on the first PDCCH, first control information used to schedule newly transmitted data, monitoring, by the terminal device, a second PDCCH at the second PDCCH candidate location during running of an inactivity timer in the DRX cycle, wherein a period of the first PDCCH is greater than a period of the second PDCCH and/or duration of the search space set in the first SSSG is less than duration of the search space set in the second SSSG.

2. The method according to claim 1, wherein the method further comprises:

   determining, by the terminal device, at least one third PDCCH candidate location based on the search space set in the second SSSG; and

   monitoring, by the terminal device, a third PDCCH at the third PDCCH candidate location during running of the on-duration timer in the DRX cycle, wherein a time for monitoring the first PDCCH is different from a time for monitoring the third PDCCH.

3. The method according to claim 2, wherein the method further comprises:
   receiving, by the terminal device, first configuration information from a network device, wherein the first configuration information comprises at least one of the following:
   a start time for monitoring the first PDCCH, a time length for monitoring the first PDCCH, a start time for monitoring the third PDCCH, or a time length for monitoring the third PDCCH.

4. The method according to any one of claims 1 to 3, wherein
   the start time for monitoring the first PDCCH is the same as a start time at which the on-duration timer is started in the DRX cycle.

5. The method according to any one of claims 2 to 4, wherein

   when the terminal device monitors the first PDCCH at the first PDCCH candidate location, a first scheduling offset value is greater than or equal to a first threshold, wherein the first scheduling offset value is a time offset value between the first PDCCH and a physical downlink shared channel PDSCH or a physical uplink shared channel PUSCH scheduled by the first PDCCH;

   when the terminal device monitors the second PDCCH at the second PDCCH candidate location, a second scheduling offset value is greater than or equal to a second threshold, wherein the second scheduling offset value is a time offset value between the second PDCCH and a PDSCH or a PUSCH scheduled by the second PDCCH, and the first threshold is greater than the second threshold; and

   when the terminal device monitors the third PDCCH at the third PDCCH candidate location, a third scheduling offset value is greater than or equal to the second threshold, wherein the third scheduling offset value is a time offset value between the third PDCCH and a PDSCH or a PUSCH scheduled by the third PDCCH.

6. The method according to any one of claims 1 to 5, wherein the method further comprises:

   determining, by the terminal device based on obtained DRX configuration information, a start time of an $i^{th}$ DRX cycle and/or a start time at which the on-duration timer is started in the $i^{th}$ DRX cycle, wherein i is a positive integer;

   determining, by the terminal device, a first parameter m and a second parameter T, wherein the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and

determining, by the terminal device based on the DRX configuration information, the first parameter m, and the second parameter T, a start time of an (i+m)$^{th}$ DRX cycle and/or a start time at which the on-duration timer is started in the (i+m)$^{th}$ DRX cycle.

7. The method according to claim 6, wherein

the first parameter m is related to a size of the DRX cycle and a size of a data transmission period; and
the second parameter T is related to the size of the DRX cycle and the size of the data transmission period, and/or the second parameter T is related to a quantity of times of DRX cycle adjustment.

8. The method according to any one of claims 1 to 5, wherein the method further comprises:

obtaining, by the terminal device, first indication information, wherein the first indication information indicates a start time at which the on-duration timer is started in a next DRX cycle and/or an offset value of the start time at which the on-duration timer is started in the next DRX cycle; and
determining, by the terminal device based on the first indication information, the start time at which the on-duration timer is started in the next DRX cycle.

9. The method according to claim 8, wherein the determining, by the terminal device based on the first indication information, the start time at which the on-duration timer is started in the next DRX cycle comprises:
determining, by the terminal device based on the DRX configuration information and the offset value of the start time at which the on-duration timer is started, the start time at which the on-duration timer is started in the next DRX cycle.

10. An information monitoring method, comprising:

determining, by a network device, at least one first physical downlink control channel PDCCH candidate location based on a search space set in a first search space set group SSSG;
sending, by the network device, at least one piece of first control information to a terminal device at the first PDCCH candidate location during running of an on-duration timer in a discontinuous reception DRX cycle;
determining, by the network device, at least one second PDCCH candidate location based on a search space set in a second SSSG; and
the first control information is used to schedule newly transmitted data, and during running of an inactivity timer in the DRX cycle, sending, by the network device, at least one piece of second control information to the terminal device at the second PDCCH candidate location, wherein a period of the first PDCCH is greater than a period of the second PDCCH and/or duration of the search space set in the first SSSG is less than duration of the search space set in the second SSSG.

11. The method according to claim 10, wherein the method further comprises:

determining, by the network device, at least one third PDCCH candidate location based on the search space set in the second SSSG; and
sending, by the network device, at least one piece of third control information to the terminal device at the third PDCCH candidate location during running of the on-duration timer in the DRX cycle, wherein a time at which the first control information is sent is different from a time at which the third control information is sent.

12. The method according to claim 11, wherein the method further comprises:
sending, by the network device, first configuration information to the terminal device, wherein the first configuration information comprises at least one of the following:
a start time for monitoring the first PDCCH, a time length for monitoring the first PDCCH, a start time for monitoring the third PDCCH, or a time length for monitoring the third PDCCH.

13. The method according to any one of claims 10 to 12, wherein the method further comprises:

determining, by the network device based on DRX configuration information, a start time of an i$^{th}$ DRX cycle and/or a start time at which the on-duration timer is started in the i$^{th}$ DRX cycle, wherein i is a positive integer;
determining, by the network device, a first parameter m and a second parameter T, wherein the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and

determining, by the network device based on the DRX configuration information, the first parameter m, and the second parameter T, a start time of an $(i+m)^{th}$ DRX cycle and/or a start time at which the on-duration timer is started in the $(i+m)^{th}$ DRX cycle.

**14.** The method according to claim 13, wherein

the first parameter m is related to a size of the DRX cycle and a size of a data transmission period; and
the second parameter T is related to the size of the DRX cycle and the size of the data transmission period, and/or the second parameter T is related to a quantity of times of DRX cycle adjustment.

**15.** The method according to any one of claims 10 to 12, wherein the method further comprises:

determining, by the network device, first indication information, wherein the first indication information indicates a start time at which the on-duration timer is started in a next DRX cycle and/or an offset value of the start time at which the on-duration timer is started in the next DRX cycle; and
sending, by the network device, the first indication information to the terminal device in an active time of the DRX cycle.

**16.** An information monitoring method, comprising:

determining, by a terminal device based on obtained DRX configuration information, a start time of an $i^{th}$ discontinuous reception DRX cycle and/or a start time at which an on-duration timer is started in the $i^{th}$ DRX cycle, wherein i is a positive integer;
determining, by the terminal device, a first parameter m and a second parameter T, wherein the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and
determining, by the terminal device based on the DRX configuration information, the first parameter m, and the second parameter T, a start time of an $(i+m)^{th}$ DRX cycle and/or a start time at which the on-duration timer is started in the $(i+m)^{th}$ DRX cycle.

**17.** The method according to claim 16, wherein

the first parameter m is related to a size of the DRX cycle and a size of a data transmission period; and
the second parameter T is related to the size of the DRX cycle and the size of the data transmission period, and/or the second parameter T is related to a quantity of times of DRX cycle adjustment.

**18.** An information monitoring method, comprising:

determining, by a network device based on DRX configuration information, a start time of an $i^{th}$ DRX cycle and/or a start time at which an on-duration timer is started in the $i^{th}$ DRX cycle, wherein i is a positive integer;
determining, by the network device, a first parameter m and a second parameter T, wherein the first parameter m is a quantity of DRX cycles between which a start time of the DRX cycle is periodically adjusted and/or the first parameter m is a quantity of DRX cycles between which the start time of the on-duration timer in the DRX cycle is periodically adjusted, the second parameter T is an offset value for adjusting the start time of the DRX cycle and/or an offset value for adjusting the start time at which the on-duration timer is started in the DRX cycle, and m is a positive integer; and
determining, by the network device based on the DRX configuration information, the first parameter m, and the second parameter T, a start time of an $(i+m)^{th}$ DRX cycle and/or a start time at which the on-duration timer is started in the $(i+m)^{th}$ DRX cycle.

**19.** The method according to claim 18, wherein

the first parameter m is related to a size of the DRX cycle and a size of a data transmission period; and
the second parameter T is related to the size of the DRX cycle and the size of the data transmission period, and/or the second parameter T is related to a quantity of times of DRX cycle adjustment.

20. An information monitoring method, comprising:

monitoring, by a terminal device, at least one physical downlink control channel PDCCH and/or receiving data on at least one physical downlink shared channel PDSCH in an active time of a discontinuous reception DRX cycle, wherein control information carried on the at least one PDCCH and/or the data comprise/comprises first indication information, and the first indication information indicates a start time at which the on-duration timer is started in a next DRX cycle and/or an offset value of the start time at which the on-duration timer is started in the next DRX cycle; and
determining, by the terminal device based on the first indication information, the start time at which the on-duration timer is started in the next DRX cycle.

21. The method according to claim 20, wherein the determining, by the terminal device based on the first indication information, a start time at which the on-duration timer is started in a next DRX cycle comprises:
determining, by the terminal device based on the DRX configuration information and the offset value of the start time at which the on-duration timer is started, the start time at which the on-duration timer is started in the next DRX cycle.

22. An information monitoring method, comprising:

determining, by a network device, first indication information, wherein the first indication information indicates a start time at which an on-duration timer is started in a next discontinuous reception DRX cycle and/or an offset value of the start time at which the on-duration timer is started in the next DRX cycle; and
sending, by the network device, at least one piece of control information and/or at least one piece of data to a terminal device in an active time of the DRX cycle, wherein the control information and/or the data comprise/comprises the first indication information.

23. A communication apparatus, comprising a module configured to perform the method according to any one of claims 1 to 9, 16 and 17, or 20 and 21.

24. A communication apparatus, comprising a module configured to perform the method according to any one of claims 10 to 15, 18 and 19, or 22.

25. A communication apparatus, comprising a processor and a communication interface, wherein the communication interface is configured to receive a signal from a communication apparatus other than the communication apparatus and transmit the signal to the processor, or send the signal from the processor to the communication apparatus other than the communication apparatus, and the processor is configured to implement the method according to any one of claims 1 to 9, 16 and 17, or 20 and 21 by using a logic circuit or executing a code instruction.

26. A communication apparatus, comprising a processor and a communication interface, wherein the communication interface is configured to receive a signal from a communication apparatus other than the communication apparatus and transmit the signal to the processor, or send the signal from the processor to the communication apparatus other than the communication apparatus, and the processor is configured to implement the method according to any one of claims 10 to 15, 18 and 19, or 22 by using a logic circuit or executing a code instruction.

27. A computer-readable storage medium, wherein

the computer-readable medium stores a computer program; and
when the computer program is run on a computer, the computer is enabled to perform the method according to any one of claims 1 to 22.

28. A computer program product, comprising computer program code, wherein when the computer program code is executed, the method according to any one of claims 1 to 22 is implemented.

FIG. 1

FIG. 2

FIG. 3

FIG. 4

PDCCH monitoring occasion

SSSG 0 { SS set 1 ...

Time

SS set 2 ...

Time

SSSG 1 { SS set 3 ...

Time

SS set 4 ...

Time

FIG. 5

Late arrival

Power consumption

Running time of an on-duration timer

Running time of the on-duration timer

DRX cycle

FIG. 6

FIG. 7

FIG. 8

900

Network
device

Terminal
device

910: The network device determines at least
one first PDCCH candidate location based
on a search space set in a first SSSG

920: Send at least one piece of first control
information to the terminal device at the
first PDCCH candidate location

930: The terminal device determines at least
one first PDCCH candidate location based on
a search space set in a first SSSG

940: The terminal device monitors a first
PDCCH at the first PDCCH candidate
location during running of an on-duration
timer in a DRX cycle

950: The network device determines at least
one second PDCCH candidate location based
on a search space set in a second SSSG

960: Send at least one piece of second
control information to the terminal device at
the second PDCCH candidate location

970: The terminal device determines at least
one second PDCCH candidate location based
on a search space set in a second SSSG

980: When monitoring, on the first PDCCH,
first control information used to schedule
newly transmitted data, the terminal device
monitors a second PDCCH at the second
PDCCH candidate location

FIG. 9

FIG. 10

FIG. 11

FIG. 12

DRX period

Next DRX period

Active time

BWP

Running time of an on-duration timer

Running time of the on-duration timer

Running time of an inactivity timer

Offset value

Running time of the on-duration timer

PDSCH

FIG. 13

<u>1400</u>

A network device determines, based on configuration information of a DRX cycle, a start time of an $i^{th}$ DRX cycle and/or a start time at which an on-duration timer is started in the $i^{th}$ DRX cycle — 1410

The network device determines a first parameter m and a second parameter T, where the first parameter m is a quantity of DRX cycles between which the start time of the DRX cycle is periodically adjusted and/or the first parameter m is a quantity of DRX cycles between which the start time of the on-duration timer in the DRX cycle is periodically adjusted, and the second parameter T is an offset value for adjusting the start time of the DRX cycle and/or an offset value for adjusting the start time at which the on-duration timer is started in the DRX cycle — 1420

The network device determines, based on the configuration information of the DRX cycle, the first parameter m, and the second parameter T, a start time of an $(i+m)^{th}$ DRX cycle and/or a start time at which the on-duration timer is started in the $(i+m)^{th}$ DRX cycle — 1430

A terminal device determines, based on obtained configuration information of a DRX cycle, a start time of an $i^{th}$ DRX cycle and/or a start time at which an on-duration timer is started in the $i^{th}$ DRX cycle — 1440

The network device determines a first parameter m and a second parameter T — 1450

The terminal device determines, based on the configuration information of the DRX cycle, the first parameter m, and the second parameter T, a start time of an $(i+m)^{th}$ DRX cycle and/or a start time at which the on-duration timer is started in the $(i+m)^{th}$ DRX cycle — 1460

FIG. 14

1500

| A network device determines first indication information, where the first indication information indicates a start time at which an on-duration timer is started in a next DRX cycle and/or an offset value of the start time at which the on-duration timer is started in the next DRX cycle | 1510 |

| The network device sends at least one piece of control information and/or at least one piece of data to a terminal device in an active time of a DRX cycle, where the control information and/or the data include/includes the first indication information | 1520 |

| The terminal device monitors at least one PDCCH and/or receives data on at least one PDSCH in the active time of the DRX cycle, where control information carried on the at least one PDCCH and/or the data include/includes the first indication information | 1530 |

| The terminal device determines, based on the first indication information, the start time at which the on-duration timer is started in the next DRX cycle | 1540 |

FIG. 15

Communication apparatus 1600

Determining module
1610

Transceiver module
1620

FIG. 16

Communication apparatus 1700

Determining module 1710

Transceiver module 1720

FIG. 17

Communication apparatus 1800

Determining module 1810

FIG. 18

Communication apparatus 1900

Determining module
1910

FIG. 19

Communication apparatus 2000

Transceiver module
2010

Determining module
2020

FIG. 20

Communication apparatus 2100

Determining module
2110

Transceiver module
2120

FIG. 21

2200

2201

Processor

Instructions

2203

2202

Memory

Instructions

2204

Transceiver

2205

Antenna

2206

FIG. 22

Communication apparatus 2300

2320

2310

2311

Antenna

2312

Radio frequency unit

2321    Board    2322

Memory → Processor

FIG. 23

Antenna

2410

Radio frequency unit

Terminal
device

2420

Memory ⇄ Processor

Input/Output apparatus

FIG. 24

| INTERNATIONAL SEARCH REPORT | International application No. |
|---|---|
| | **PCT/CN2022/113491** |

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 搜索空间, 物理下行控制信道, 不连续接收, 持续定时器, 非激活定时器, 周期, 候选, 位置, 监听, 监测, search space, PDCCH, DRX, discontinu+ receive, DRX, InactivityTimer, period, candidate, location

**C. DOCUMENTS CONSIDERED TO BE RELEVANT**

| Category* | Citation of document, with indication, where appropriate, of the relevant passages | Relevant to claim No. |
|---|---|---|
| X | CN 112312524 A (DATANG MOBILE COMMUNICATIONS EQUIPMENT CO., LTD.) 02 February 2021 (2021-02-02) <br> description, paragraphs [0087]-[0364], and figures 2-3 | 20-28 |
| A | CN 112312525 A (DATANG MOBILE COMMUNICATIONS EQUIPMENT CO., LTD.) 02 February 2021 (2021-02-02) <br> entire document | 1-28 |
| A | CN 111432460 A (BEIJING SAMSUNG TELECOM R&D CENTER et al.) 17 July 2020 (2020-07-17) <br> entire document | 1-28 |
| A | WO 2020199121 A1 (ZTE CORP.) 08 October 2020 (2020-10-08) <br> entire document | 1-28 |
| A | WO 2020032706 A1 (LG ELECTRONICS INC.) 13 February 2020 (2020-02-13) <br> entire document | 1-28 |
| A | SAMSUNG. "Discussion on DCI-based power saving techniques" <br> *3GPP TSG RAN WG1 #104 R1-2101220,* 05 February 2020 (2020-02-05), <br> entire document | 1-28 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 November 2022** | **17 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2022/113491** |

| Patent document cited in search report | | | Publication date (day/month/year) | Patent family member(s) | | | Publication date (day/month/year) |
|---|---|---|---|---|---|---|---|
| CN | 112312524 | A | 02 February 2021 | None | | | |
| CN | 112312525 | A | 02 February 2021 | None | | | |
| CN | 111432460 | A | 17 July 2020 | KR | 20210118415 | A | 30 September 2021 |
| | | | | EP | 3681207 | A1 | 15 July 2020 |
| | | | | US | 2020229092 | A1 | 16 July 2020 |
| | | | | WO | 2020145624 | A1 | 16 July 2020 |
| | | | | EP | 4007380 | A1 | 01 June 2022 |
| | | | | US | 2022217633 | A1 | 07 July 2022 |
| WO | 2020199121 | A1 | 08 October 2020 | EP | 3949527 | A1 | 09 February 2022 |
| | | | | US | 2022201516 | A1 | 23 June 2022 |
| | | | | KR | 20210147019 | A | 06 December 2021 |
| | | | | CN | 113973511 | A | 25 January 2022 |
| WO | 2020032706 | A1 | 13 February 2020 | US | 2021345406 | A1 | 04 November 2021 |
| | | | | CN | 112703810 | A | 23 April 2021 |

Form PCT/ISA/210 (patent family annex) (January 2015)

**REFERENCES CITED IN THE DESCRIPTION**

**Patent documents cited in the description**

- CN 202111029909